# EUROPEAN PATENT APPLICATION

(11) **EP 1 814 280 A2**
(43) Date of publication of application: **01.08.2007**
(21) Application number: 07001739.7
(22) Date of filing: 26.01.2007
(51) Int. Cl.: H04L 29/06

(54) **Multimedia processing apparatus and method for mobile phone**

(30) Priority: 27.01.2006 KR 20060009047
(71) Applicant: Samsung Electronics Co., Ltd., Suwon-si, Gyeonggi-Do (KR)
(72) Inventor: Seo, Jeong-Wook, Suseong-gu Daegu Metropolitan City (KR); Choi, Seung Chul, Suseong-gu Daegu Metropolitan City (KR)
(74) Representative: Lang, Johannes

(57) **Abstract**

A multimedia processing apparatus and a multimedia processing method are provided for a mobile phone. The multimedia processing apparatus of a mobile phone includes a first multimedia module for receiving and demodulating broadcast data to produce first multimedia data; a second multimedia module for generating second multimedia data; a selector for selecting one of the first and second multimedia modules and interfacing with the first and second multimedia modules; a multimedia processing unit including a protocol processor and video and audio codecs, the protocol processor and the audio and video codecs being activated according to a source selection signal when the first multimedia module is selected, and only the audio and video codecs being activated when the second multimedia module is selected; and a display for displaying multimedia data processed by the multimedia processing unit.

## Description

### BACKGROUND OF THE INVENTION

### 1. Field of the Invention

The present invention relates to a mobile phone and, in particular, to a multimedia processing apparatus and method for a mobile phone.

### 2. Description of the Related Art

Recently, mobile phones are equipped with a dedicated multimedia processor or include various multimedia functions. Recent mobile phones are offering more and more advanced multimedia capabilities including a camera and digital broadcasting receiver functions. In order to support these multimedia functions, hardware configurations and application procedures for operating a mobile phone become more and more complicated. This is true for cellular phones, laptops, and Personal Digital Assistants (PDAs) having radio frequency (RF) communication modules for supporting audiovisual communications.

For example, a camera-enabled mobile phone requires camera applications for processing data signals, synchronization signals, and clock signals. The synchronization signals can be set in various configuration conditions. In the case of a digital broadcast-enabled mobile phone, a digital broadcast application processes data signals, and error and valid signals such that the data signals are received according to the error and valid signals in respective conditions.

In the case of a mobile phone implemented with the camera and the digital broadcast receiver modules, the mobile phone should process the data received through the respective modules. For this reason, the mobile phone is provided with image processing devices for processing images taken by the camera module and received through the digital broadcast receiver module. Such mobile phone should be implemented with complex hardware configuration and image processing procedures for processing two different kinds of image data.

Accordingly, there has been a need for a technique that is capable of simplifying a configuration of multiple multimedia modules and processing procedures of various multimedia data generated by the multimedia modules.

### SUMMARY OF THE INVENTION

The present invention has been made in an effort to solve at least the above problems, and it is an aspect of the present invention to provide a multimedia processing apparatus and method that are capable of processing multimedia data generated by different multimedia modules through a single interface.

It is another aspect of the present invention to provide a multimedia processing apparatus and method that are capable of processing multimedia data input from a digital broadcast receiver and camera modules within a common data processor.

It is another aspect of the present invention to provide a multimedia processing apparatus and method that are capable of processing multimedia data input through a digital broadcast receiver, camera, and camcorder within a common data processor.

It is another aspect of the present invention to provide a multimedia processing apparatus and method that are capable of simultaneously displaying images received through a digital broadcast receiver module and taken by a camera module.

It is another aspect of the present invention to provide a multimedia processing apparatus and method that are capable of selectively processing multimedia data input from a digital broadcast receiver and a camera through a common multimedia data processor.

In accordance with an aspect of the present invention, the above and other objects are accomplished by a multimedia processing apparatus. The multimedia processing apparatus includes a first multimedia module for receiving and demodulating broadcast data to produce first multimedia data; a second multimedia module for generating second multimedia data; a selector for selecting one of the first and second multimedia modules and interfacing with the first and second multimedia modules; a multimedia processing unit including a protocol processor and video and audio codecs, the protocol processor and the audio and video codecs being activated when the first multimedia module is selected, and only the audio and video codecs being activated when the second multimedia module is selected, according to a source selection signal; and a display for displaying multimedia data processed by the multimedia processing unit.

In accordance with another aspect of the present invention, the multimedia processing apparatus includes a radio frequency (RF) unit for radio communication with a mobile communication system; a broadcast receiver for receiving and demodulating broadcast signal; a camera; a selector for selecting one of outputs from the broadcast receiver and the camera and interfacing the camera as the broadcast receiver; a multimedia processing unit including a protocol processor and video and audio codecs, the protocol processor and the audio and video codecs being activated when the output of the broadcast receiver is selected, and only the audio and video codecs being activated when the camera is selected, according to a source selection signal; a memory for storing data obtained by processing the outputs under the control of the multimedia processing unit; and a display for displaying the data output from the multimedia processing unit.

In accordance with another aspect of the present invention, the above and other objects are accomplished by a multimedia processing method for a mobile phone including a broadcast receiver and a camera. The multimedia processing method includes extracting, when the broadcast receiver is selected, broadcast information and video and audio data from broadcast data received by the broadcast receiver by protocol-processing the broadcast data; decoding the video and audio data; displaying the decoded video data; converting, when the camera is selected, camera data input from the camera into the broadcast data; and displaying the converted camera data.

In accordance with another aspect of the present invention, the multimedia processing method includes activating, when a multi source processing mode is set, the broadcast receiver for timeslots assigned for a service channel and activating the camera for the remaining time slots, according to a time slicing control signals; extracting, when the broadcast receiver is activated, broadcast information and broadcast video and audio data by protocol-processing broadcast data received by the broadcast receiver; decoding the broadcast video and audio data; buffering the decoded broadcast video and audio data; converting, when the camera is activated, camera data input from the camera into the broadcast video data representing camera video data; buffering the camera video data; multiplexing the broadcast video data and the camera video data; and displaying the broadcast video data as a main picture and the camera video data as a sub picture on a screen at the same time.

In accordance with another aspect of the present invention, the multimedia processing method includes extracting, when the broadcast receiver is selected, broadcast information and broadcast video and audio data by protocol-processing broadcast data input from the broadcast receiver; decoding the broadcast video and audio data; displaying the broadcast video data on a screen; converting, when the camera is selected, camera data input from the camera into the broadcast video data representing camera video data; encoding, if an audiovisual telephony mode is activated, the camera video data together with outgoing voice; transmit the encoded camera video data and outgoing voice as an outgoing audiovisual telephony signal input through a radio channel; decoding an incoming audiovisual telephony signal; and displaying camera video data obtained by decoding the incoming audiovisual telephony signal on the screen.

### BRIEF DESCRIPTION OF THE DRAWINGS

The above and other objects, features and advantages of the present invention will be more apparent from the following detailed description in conjunction with the accompanying drawings, in which:
FIG. 1 is a block diagram illustrating a configuration of a mobile phone according to the present invention;
FIGs. 2A and 2B are block diagrams illustrating configurations of power controllers of the mobile phone in FIG. 1;
FIG. 3 is a block diagram illustrating a configuration of the source selector of the mobile phone in FIG. 1;
FIG. 4 is a block diagram illustrating a configuration of the broadcast receiver of the mobile phone of FIG. 1;
FIG. 5 is a diagram illustrating a format of TS packet of DVB-H system; FIGs. 6A to 6C are conceptual views illustrating demodulation operation of the broadcast receiver of FIG. 4;
FIG. 7 is a flowchart illustrating an operation of a broadcast receiver of a mobile phone according to an embodiment of the present invention;
FIG. 8 is a flowchart illustrating the physical channel setting procedure of FIG. 7 in detail;
FIG. 9 is a flowchart illustrating a PID filtering procedure of FIG. 7 in detail;

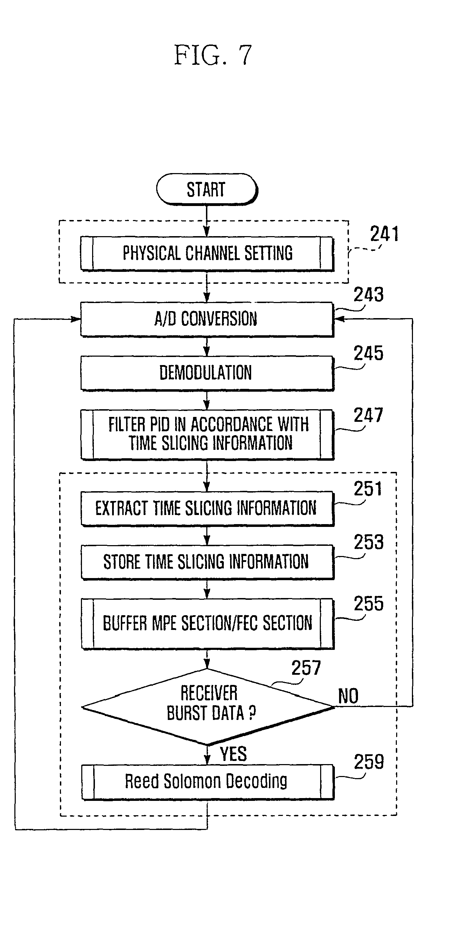

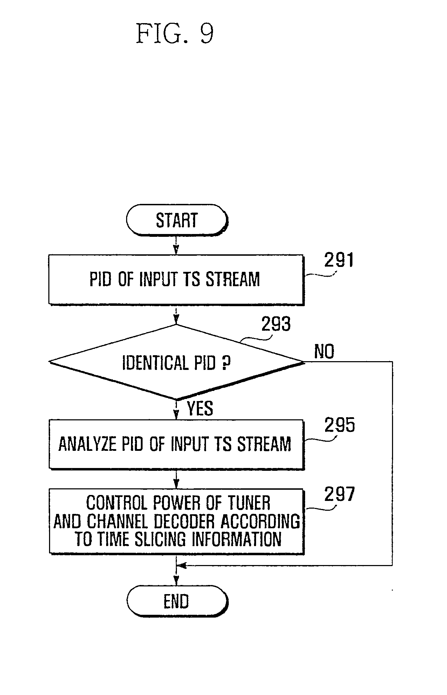

FIG. 9 is a flowchart illustrating a PID filtering procedure of FIG. 7 in detail;

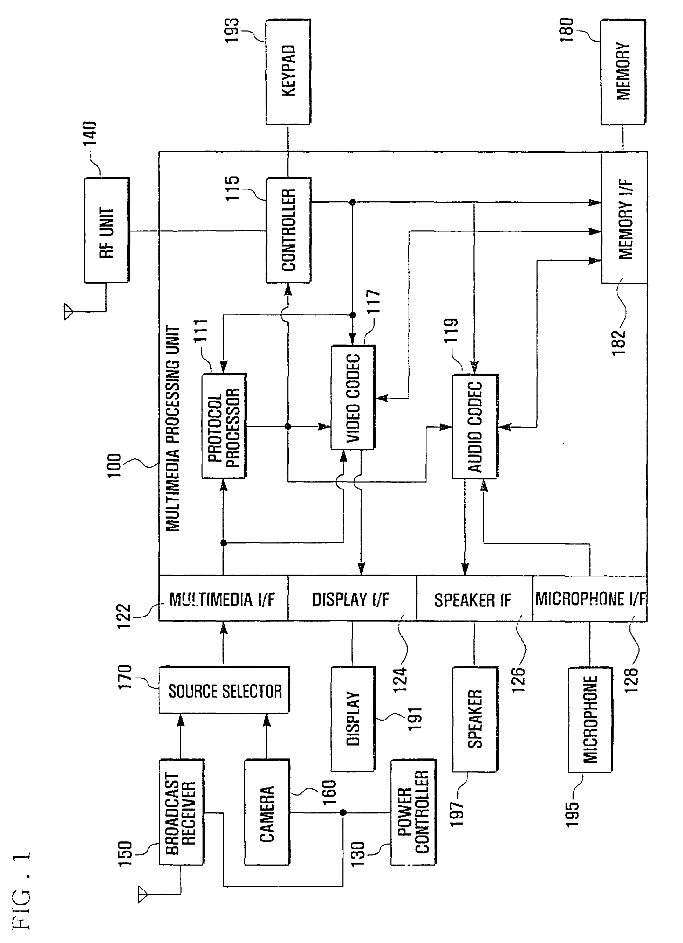

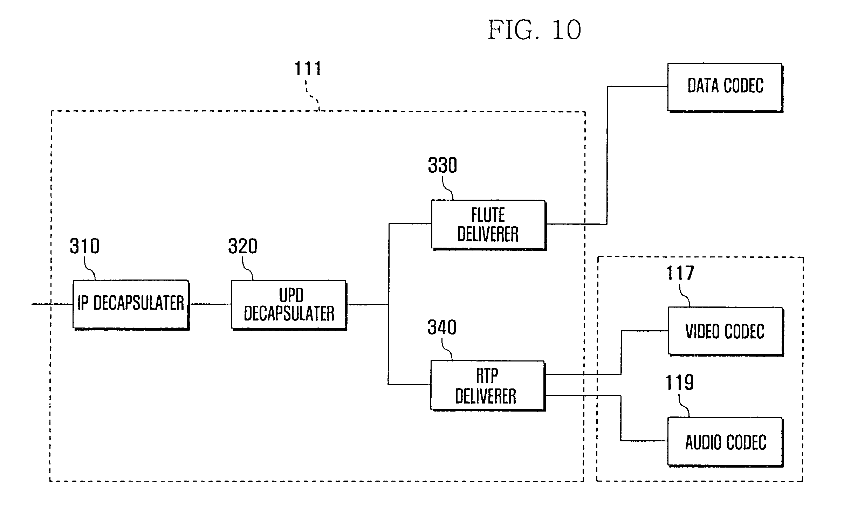

FIG. 10 is a diagram illustrating a configuration of the protocol processor 111 of the mobile phone of FIG. 1;

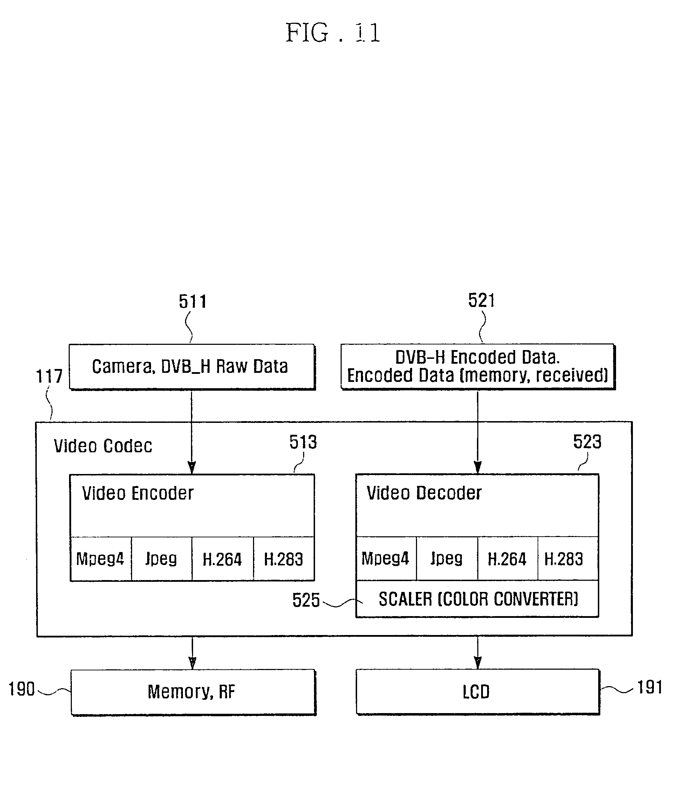

FIG. 11 is a block diagram illustrating a configuration of the video codec of the mobile phone according to an embodiment of the present invention;

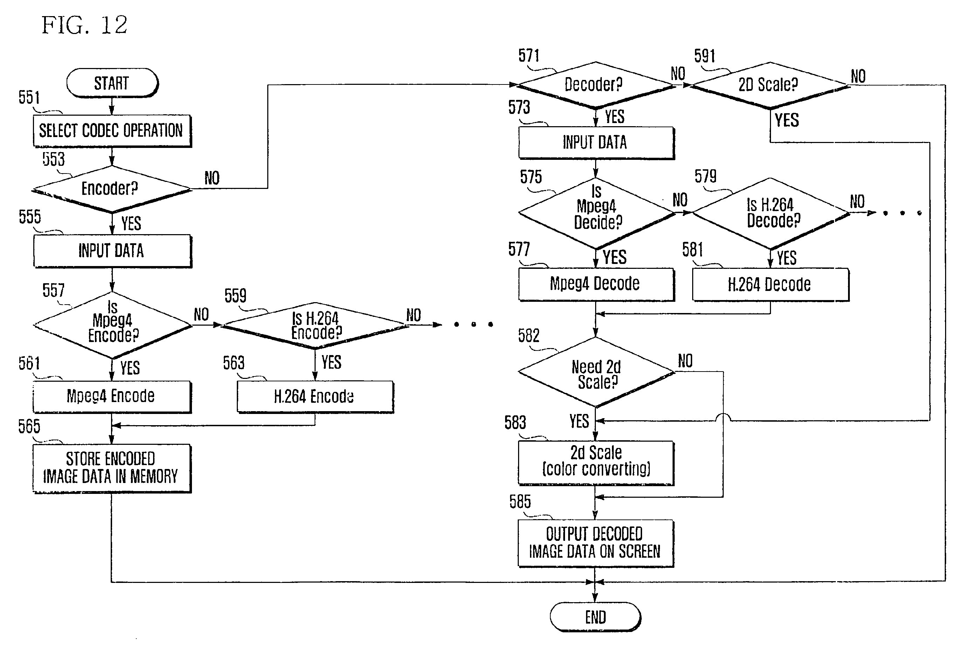

FIG. 12 is a flowchart illustrating an operation of the video codec of FIG. 11;

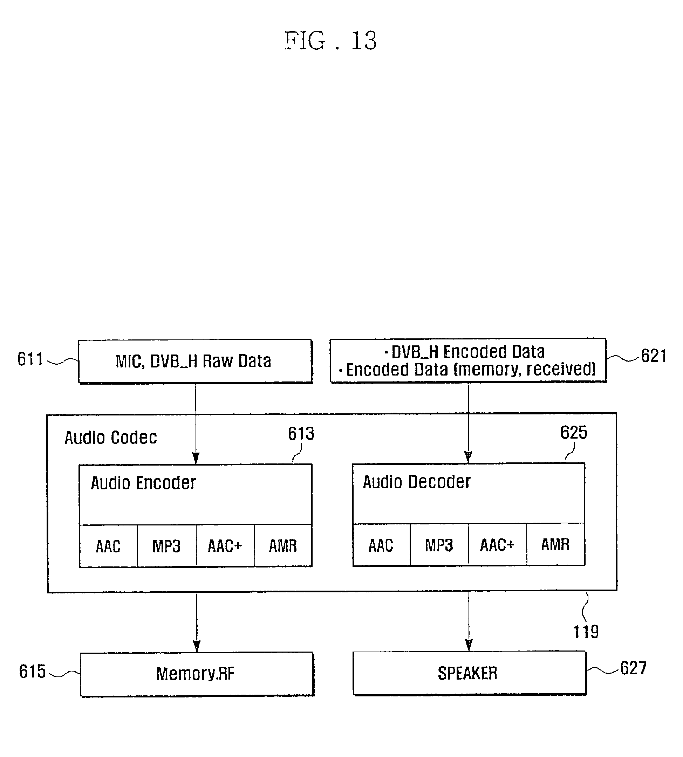

FIG. 13 is a block diagram illustrating a configuration of the audio codec of the mobile phone according to the present invention;

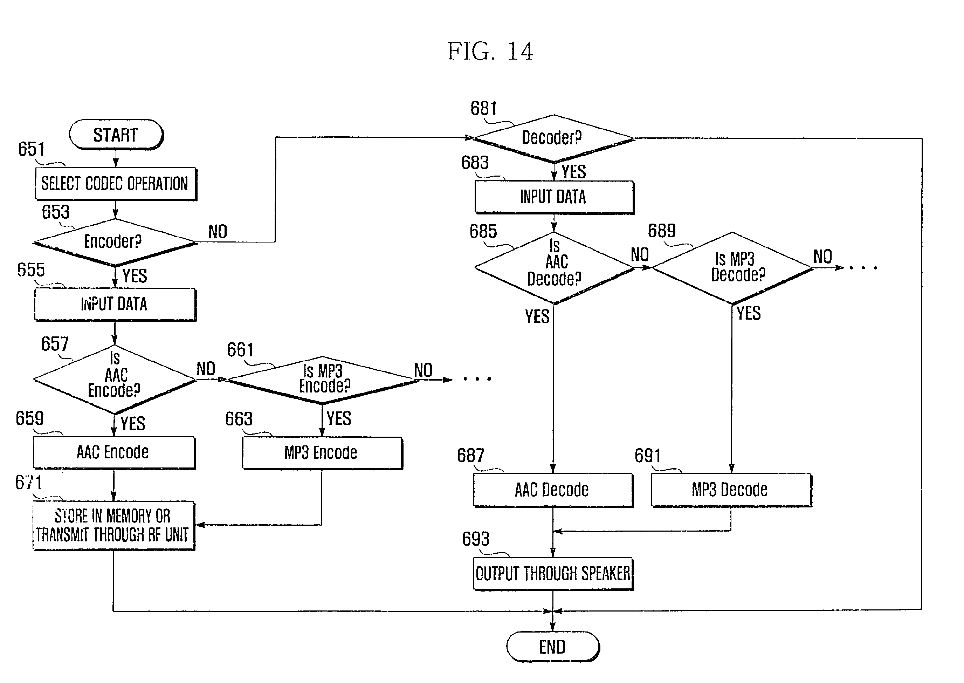

FIG. 14 is a flowchart illustrating an operation of the audio codec of FIG. 13;

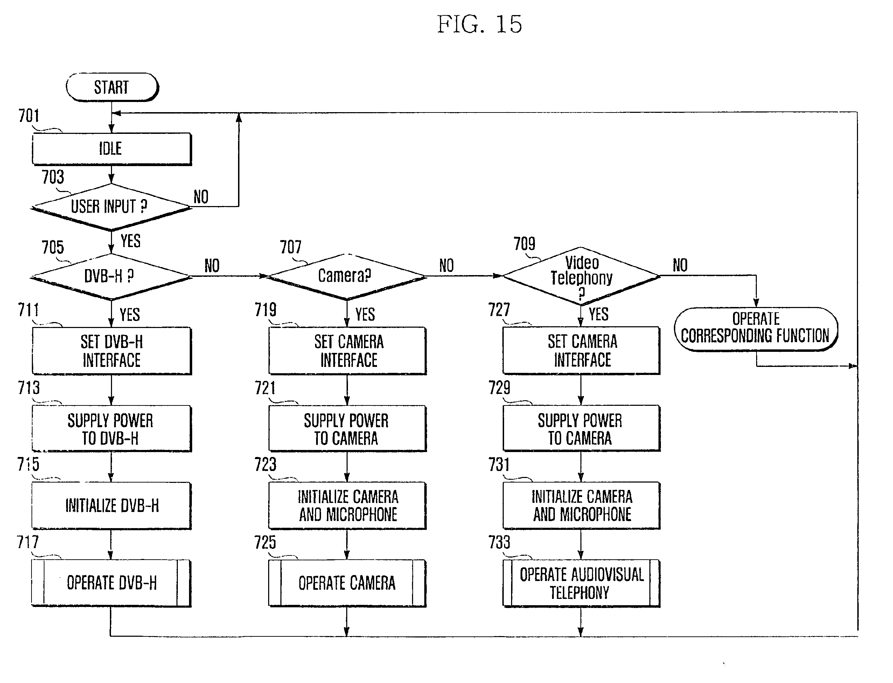

FIG. 15 is a flowchart illustrating an operation of a mobile phone according to the present invention;

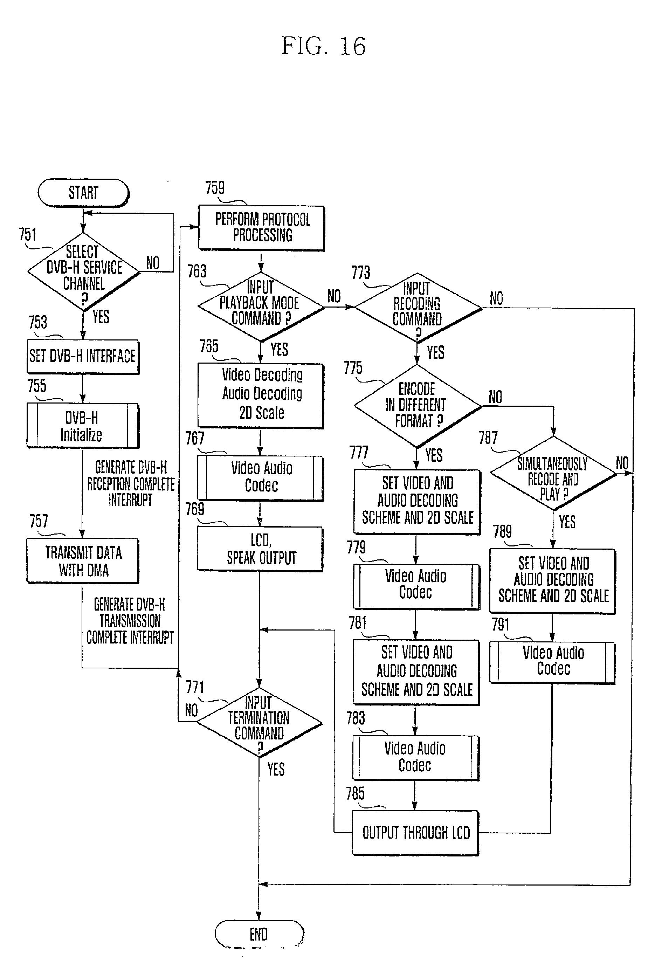

FIG. 16 is a flowchart illustrating a procedure for processing DVB-H broadcast signal in the mobile phone according to the present invention;

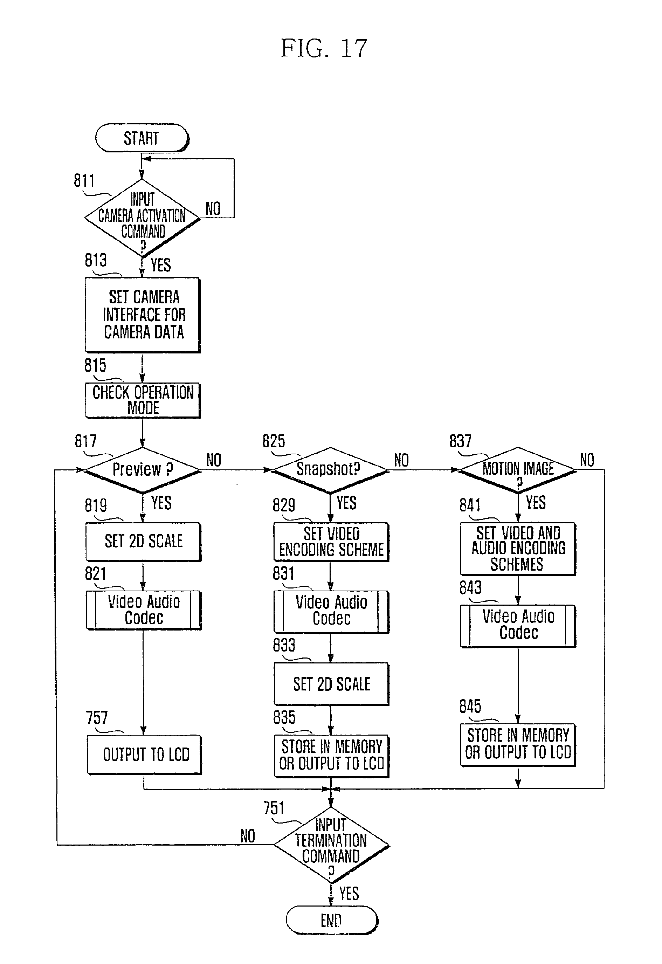

FIG. 17 is a flowchart illustrating a procedure for processing video signal input through a camera of the mobile phone according to the present invention;

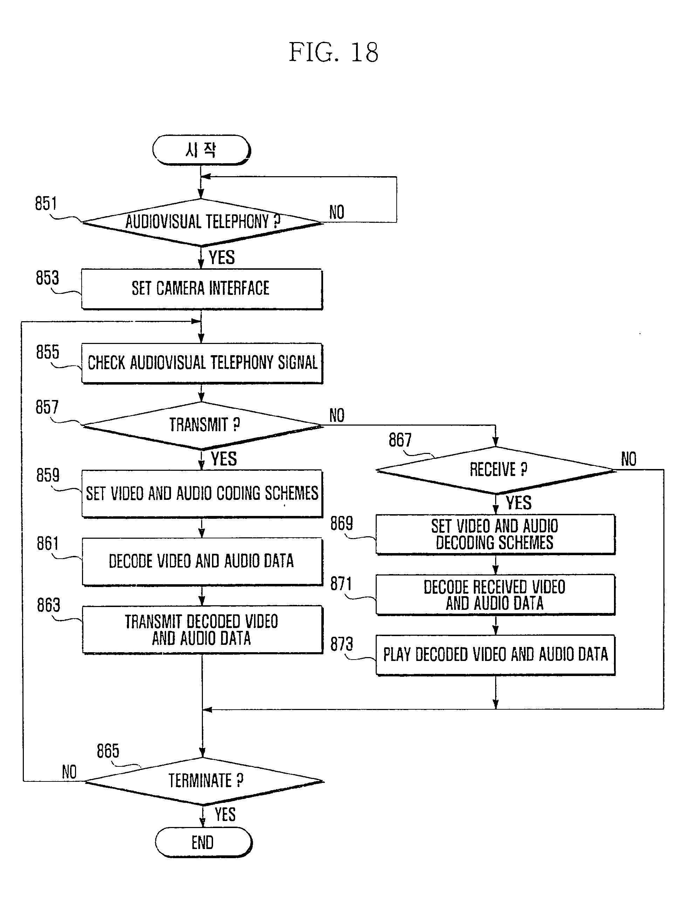

FIG. 18 is a flowchart illustrating an audiovisual telephony operation of the mobile phone according to the present invention;

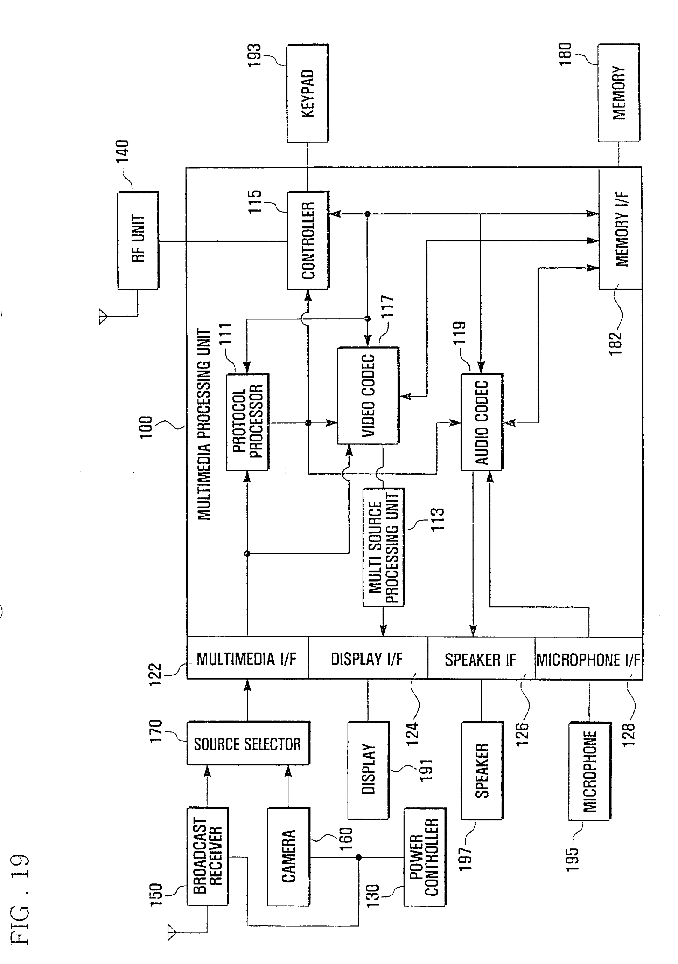

FIG. 19 is a block diagram illustrating a configuration of a mobile phone according to the present invention;

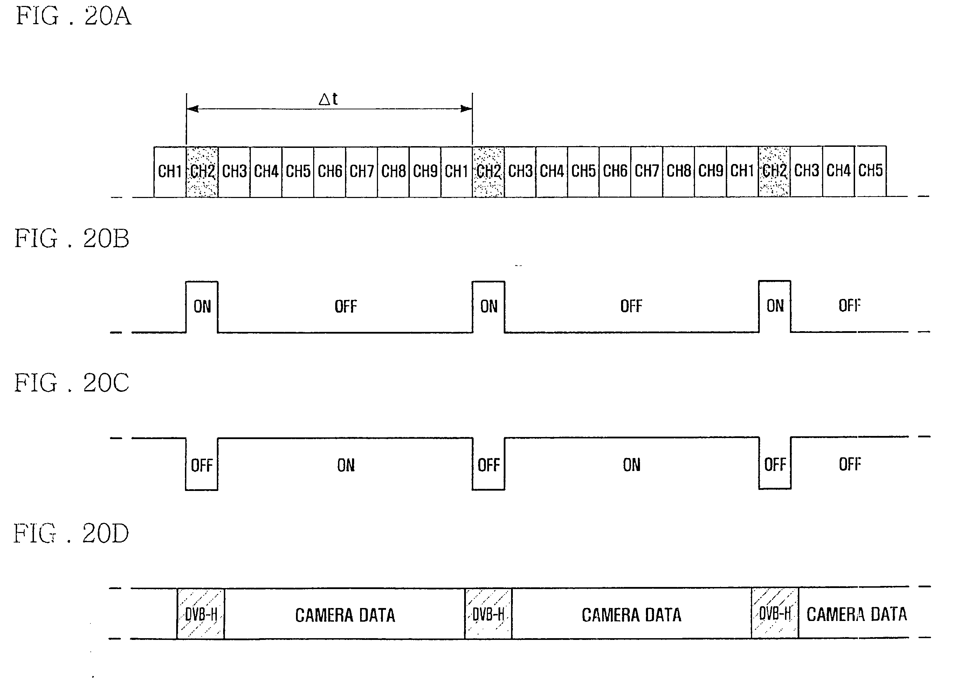

FIGs. 20A to 20D are conceptual views illustrating a timing control for processing multimedia data input from multiple source in the mobile phone of FIG. 19;

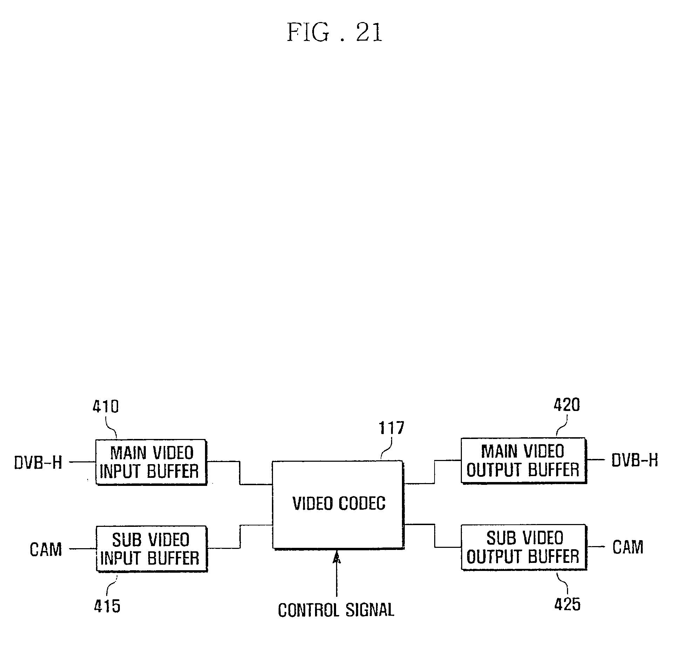

FIG. 21 is a block diagram illustrating a multimedia processing unit of a mobile phone according to the present invention;

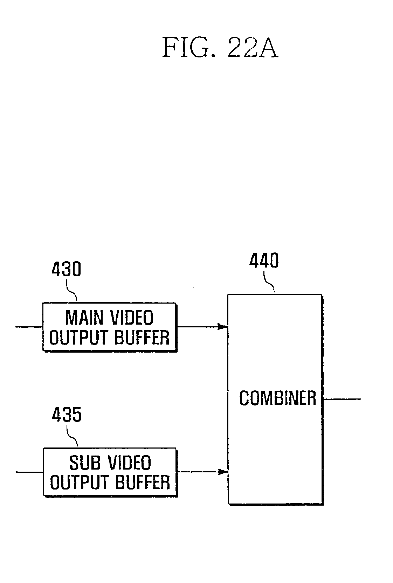

FIGs. 22A to 22C are block diagrams illustrating configurations of a multi source processing unit of a mobile phone of FIG. 19;

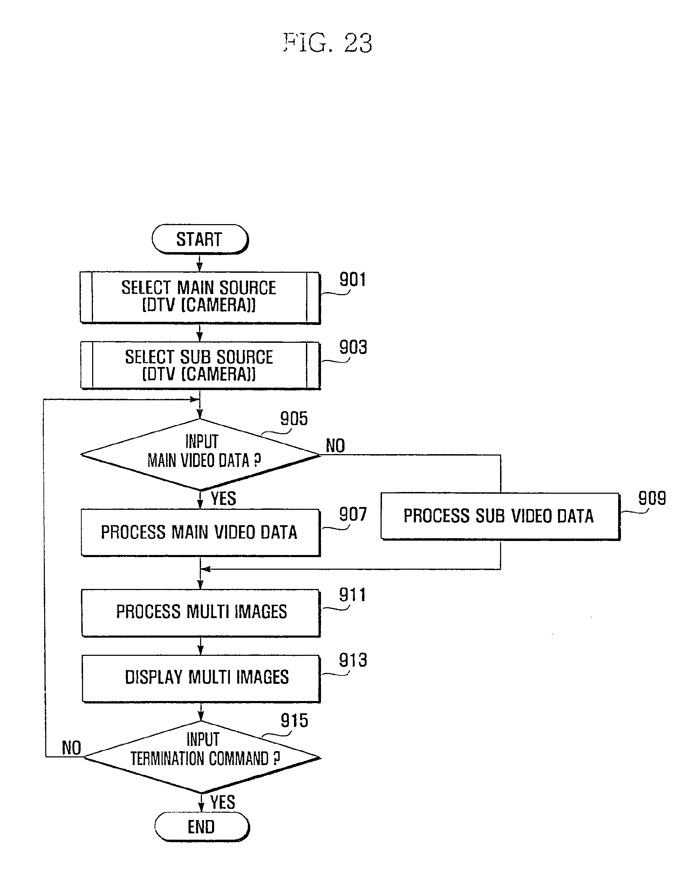

FIG. 23 is a flowchart illustrating a multi image display procedure for a mobile phone according to the present invention;

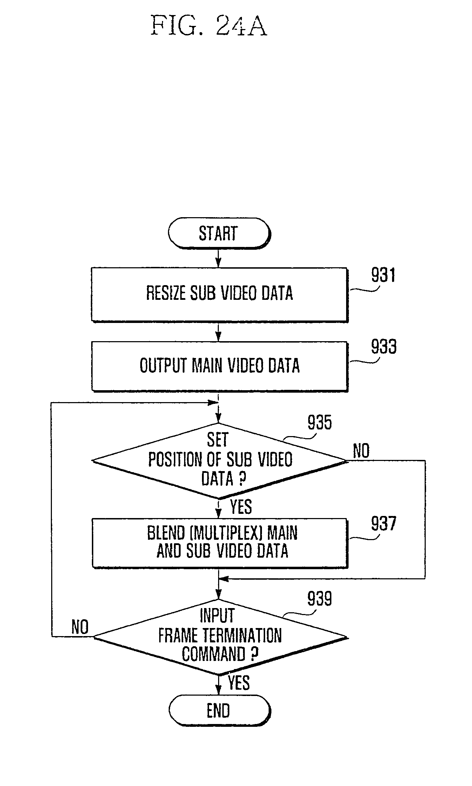

FIG. 24A is a flowchart illustrating a procedure for multiplexing main and sub video data in a mobile phone according to the present invention; and

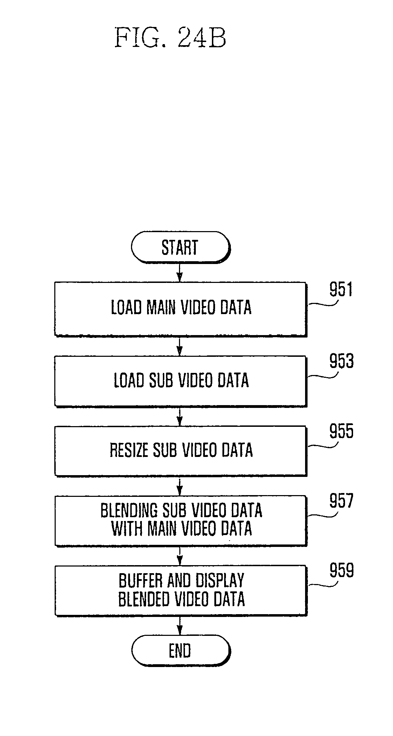

FIG. 24B is a flowchart illustrating a procedure for multiplexing main and sub video data in a mobile phone according to the present invention.

### DETAILED DESCRIPTION OF PREFERRED EMBODIMENTS

Preferred embodiments of the present invention are described with reference to the accompanying drawings in detail. Note that the same or similar elements in the drawings are designated by the same reference numerals as far as possible although they are shown in different drawings, and detailed descriptions of well-known functions and structures incorporated herein may be omitted to avoid obscuring the subject matter of the present invention.

In order to enable a clear and consistent understanding of detailed description and the claims, basic information on the following terms are provided. Unless otherwise noted, terms are to be understood according to conventional usage by those skilled in the relevant art.

In the present invention, different types of multimedia data generated by different multimedia modules installed in a mobile phone are processed within a common multimedia processor. A digital broadcast includes a Digital Multimedia Broadcasting (DMB), Digital Video Broadcasting (DVB), and Media Forward Link Only (Media FLO). The DVB is classified into a DVB Terrestrial (DVB-T) and DVB Handheld (DVB-H). The DVB-H delivers broadcast data over Internet Protocol (IP). The multimedia processing apparatus of the present invention is described in association with the DVB-H system as an example. However, the present invention is not limited to the DVB-H but can be adapted to mobile terminals supporting other DVB, DMB, and Media FLO services.

In the present invention, a shared multimedia processor is provided for processing various multimedia data input from different multimedia modules. The multimedia modules include a digital broadcasting receiver and camera. The shared multimedia processor can selectively process the broadcast signal received through the digital broadcasting receiver and still or motion image data taken through the camera. The shared multimedia processor can process the multimedia data input through different multimedia modules so as to be simultaneously displayed on a screen.

The following definitions are provided to enable a clear and consistent understanding of the detailed description and the claims.

A "physical channel" is a frequency channel selected by a tuner, a "service channel" is a logical channel assigned a program identifier or product identifier (PID) for a broadcast service, an "event" means a program provided through the service channel. The service channel can be identified with PID in the DMB and DVB-T systems. In the case of DVB-H, the service channel is identified with a combination of PID, IP address, and port number.

The present invention includes two methods: the first for processing multimedia data generated by multiple multimedia modules at a shared multimedia data processing unit and the second for simultaneously displaying the multimedia data on a screen.

FIG. 1 is a block diagram illustrating a configuration of a mobile phone according to the present invention.

In this embodiment, the present invention is described with a digital broadcast receiver and camera as multimedia modules.

Referring to FIG. 1, the mobile phone is provided with a power controller 130 and source selector 170 for distinguishing digital broadcast data and camera data, and a multimedia processing unit 100 for controlling processes of the multimedia data having different formats. The multimedia processing unit 100 controls a broadcast receiver 150 and camera 160 to take multimedia data and processes the multimedia data input through the digital broadcast receiver 150 and camera 160. The multimedia processing unit 100 includes a controller 115, protocol processor 111, video codec 117, audio codec 119, and an interface module including a multimedia interface 122 for connecting the selector 170, display interface 124 for connecting a display 191, speaker interface 126 for connecting a speaker 197, microphone interface 128 for connecting a microphone 195, and memory interface 182 for connecting a memory 180.

The controller 115 controls general operations of the mobile phone and can be integrated into the multimedia processing unit 100 or separately implemented outside the multimedia processing unit 100.

An operation of the above structured mobile phone is described hereinaf ter. The multimedia processing unit 100 controls digital broadcast, camera, and video conference functions of the mobile phone. The multimedia processing unit 100 can simultaneously process multimedia data input through more than two multimedia modules.

In a case of receiving and processing digital broadcast signals, the controller 115 controls the power controller 130 to supply driving voltage to the broadcast receiver 150 and controls the source selector 170 to selectively connect an output of the broadcast receiver 150 to the multimedia processing unit 100. The controller 115 outputs channel data of a channel selected by a user to the broadcast receiver 150. The channel data includes information on a physical channel frequency and a PID of corresponding service channel. The broadcast receiver 150 includes a tuner and demodulator. The tuner sets the physical channel for receiving the broadcast signals in accordance with the channel data. The demodulator demodulates the broadcast signals output from the tuner and extracts the PID from the demodulated broadcast signals so as to output the broadcast signals identified by PID to the multimedia processing unit 100. The broadcast signal is a Motion Picture Experts Group 2 transport stream (MPEG2 TS) of IP datagram containing IP address. The IP datagram has a format represented by service and data packet streams as shown in Table 1. The service packet stream is formed as shown in Table 2, and the data packet is formed as shown in Table 3.

**[TABLE 1]**

| | | | | | |
|---|---|---|---|---|---|
| service 1 | service 2 | service 3 | data 1 | data2 | ------ |

**[TABLE 2]**

| | | | | | | |
|---|---|---|---|---|---|---|
| IP headerr | RTP header | payload | IP header | RTP header | payload | ------ |

**[TABLE 3]**

| | | | | | | |
|---|---|---|---|---|---|---|
| IP header | FLUTE header | payload | IP header | FLUTE header | payload | ------ |

The protocol processor 111 checks the protocols of the IP datagrams output from the broadcast receiver 150 so as to differentiate audio, video, and broadcast data (File Delivery over Unidirectional Transport (FLUTE) data (not shown)). The audio, video, and FLUTE data are transmitted to the audio codec 119, video codec 117, and a data codec (a codec for processing the FLUTE data).

The multimedia processing unit 100 can be integrated with the video codec 117 and the audio codec 119 while the data are processed separately. The multimedia processing unit 100 also can be integrated with the video codec 117, audio codec 119, and data codec.

In this embodiment, the controller 115 processes the FLUTE packet stream using a software data codec. The protocol processor 111 processes protocol of the received TS stream and transports the FLUTE data to the controller 115 and transport the audio and video data to the audio codec 119 and video codec 117, respectively.

The video codec 117 and audio codec 119 decode the respective video and audio codecs and output the decoded video and audio data through the display 191 and speaker 197. In a case of recording the digital broadcast signal, the video and audio data decoded by the protocol processor 111 is stored within the memory 180. The stored video and audio data is replayed by means of the audio codec 119 and video codec 117.

A procedure for processing video and audio data taken by the camera is described hereinafter.

In the camera mode, the controller 110 controls the power controller 130 to supply power to the camera 160 and controls the source selector 170 to select the camera as a data source, such that the image data taken by the camera 160 is output to the multimedia processing unit 100. The multimedia processing unit 100 can process the data output from the broadcast receiver 150 and camera 160 since the data formats of the broadcaster receiver 150 and the camera 160 are similar to each other. The camera data includes the image data, synchronization signal, and clock signal, and the synchronization signal can be set in accordance with various conditions. The broadcast receiver data includes the broadcast data, error and valid signals, and a clock signal. The error and valid signals can be coupled with the synchronization signal of the camera and the broadcast data can be reformatted by performing a buffering process appropriated for the video and audio codecs 117 and 119 such that the data output from both the broadcast receiver 150 and the camera 160 can be processed at the multimedia processing unit 100.

If the camera 160 is connected to the multimedia processing unit 100, output impedance of the broadcast receiver 159 for the clock signal, valid signal, and error signal is maintained in a high state for avoiding any unwanted influence from the output of the camera. If the broadcast receiver 150 is selected as the multimedia source, the output impedance of the camera is maintained in a high state for the same reason. In the case that the broadcast receiver 150 and the camera 160 are selected at the same time, the multimedia processing unit 100 controls the power controller 130 and the selector 170 to alternately output data. The alternate data output can be controlled in accordance with time slicing control signal. The broadcast receiver 150 is coupled with the multimedia processing unit 100 in timeslots assigned for the selected broadcast service channel and the camera 160 is coupled with the multimedia processing unit 100 in the remaining timeslots.

If the image data is input from the camera 160, the multimedia processing unit 100 controls the video codec 117 to scale the video data so as to be displayed through the display 191 and the audio codec 119 to output the audio signal through the speaker 197. For recording the data taken by the camera, the multimedia processing unit 100 controls the video and audio codec 117 and 119 to encode the video and audio data and store the encoded video and audio data within the memory 180 while outputting the video and audio data through the display 191 and speaker 197, respectively.

As described above, since the digital broadcast signal includes the broadcast data, valid signal, clock signal, other types of multimedia signals including similar format can be processed by the multimedia processing unit 100. For this purpose, the multimedia modules including the broadcast receive share a common interface line and single power source.

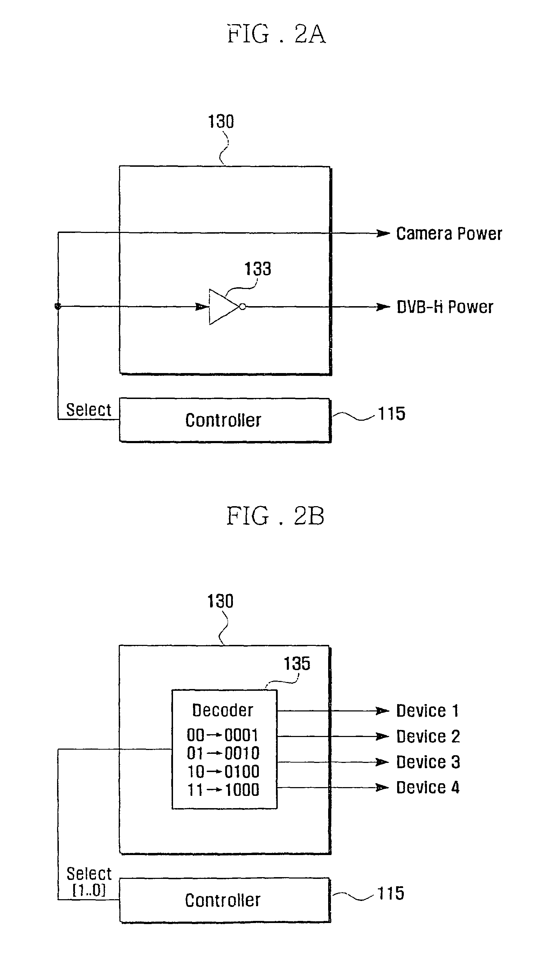

FIGs. 2A and 2B are block diagrams illustrating configurations of power controllers of the mobile phone in FIG. 1.

The power controller 130 of FIG. 2A is configured to control the power supply to two multimedia sources, i.e., the broadcast receiver 150 and the camera 160. The power controller 130 of FIG. 2B is configured to supply power to 4 multimedia sources.

In FIG. 2A, the multimedia processing unit 100 generates a power control signal for selecting a power corresponding to the multimedia source, i.e. the broadcast receiver 150 or the camera 160. The power controller 130 is provided with an inverter 133 such that if a low logical signal is generated by the multimedia processing unit 100 for a low active power control, the low logical signal is provided for the camera power and a high logical signal inverted by the inverter 133 is provided for the broadcast receiver 150. Accordingly, the power is supplied to the camera 160 but not to the broadcast receiver 150.

If the multimedia processing unit 100 outputs the high logical signal, the high logical signal is inverted by the inverter 133 so as to be output as the low logical signal such that the power is supplied to the broadcast receiver 150 but not to the camera 160.

In the case of processing the data from more than two multimedia sources as shown in FIG. 2B, the power controller 130 is implemented with a decoder 135, and the multimedia processing unit 100 generates one of four 2-bit control signals. The decoder 135 of power controller 130 decodes the 2-bit power control signal to output a power control signal for activating a specific multimedia source. In this manner, the multimedia processing unit 100 can control the power supply to multiple multimedia sources using a common signal line.

For processing the data from the two multimedia sources, the multimedia processing unit 100 uses one signal line for activating the two multimedia sources. For processing the data from more than two multimedia sources, the multimedia processing unit 100 uses more than one signal line for outputting the control signals. The power controller 130 controls the decoder 135 to decode the control signals for activating the corresponding multimedia modules.

If a multimedia source selection signal in input by a user, the multimedia processing unit 100 outputs a control signal to the power controller 130 for activating the corresponding multimedia module such that the power controller 130 supplies the power to activate the multimedia module. The power controller 130 also controls the source selector 170 to couple the activated multimedia module with the multimedia processing unit 100.

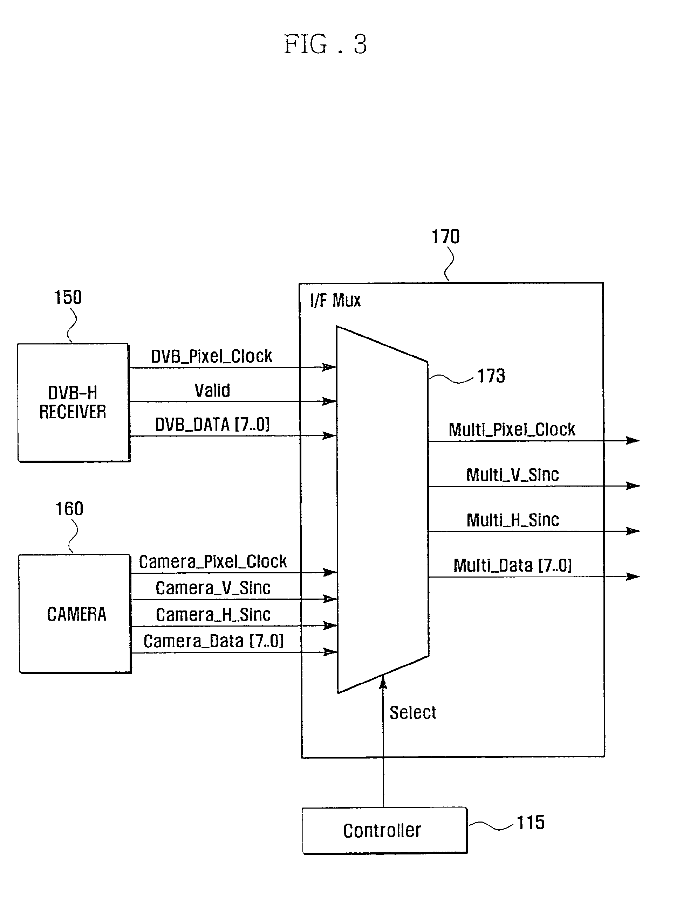

FIG. 3 is a block diagram illustrating a portion of numeral 170 in FIG. 1. Referring to FIG. 3, the data formats output from the broadcast receiver 150 and the camera 160 are similar to each other. The camera signal includes a camera pixel clock, horizontal and vertical synchronization signals, and 8-bit data. The broadcast receiver signal includes a pixel clock, a demodulation error signal (for example, valid signal), and 8-bit data. The valid signal can be used as synchronization signal of the camera such that the data from the broadcast receiver 150 and the camera 160 can be interfaced in the same manner.

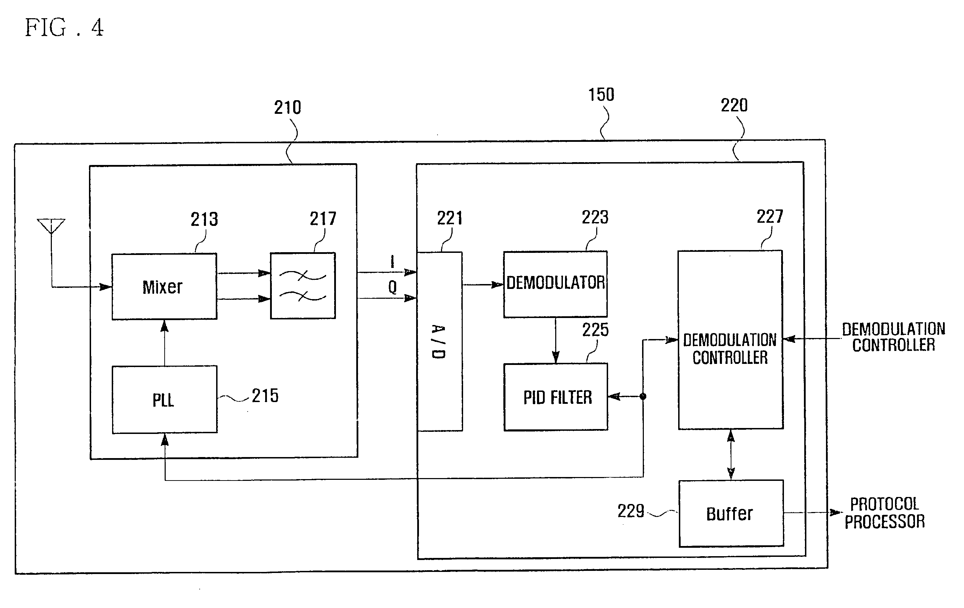

Referring also to FIG. 4, in the case that MT demodulator (for example, MT 352) is used for an Orthogonal Frequency Division Multiplexing (OFDM) or Coded OFDM (COFDM) modulator 223 of the broadcast receiver 150 and an OMAP processor (for example, OMAP 1610 is used for the multimedia processing unit 100, MOD 0-7 of the broadcast data demodulation unit 220 can be connected to CAM_D of the multimedia processing unit 100 since the MOD 0-7 of the broadcast demodulation unit 220 is a 8-bit bus for transferring MPEG TSdata, and the MDCLOK representing the data and control synchronization clock of the broadcast data demodulation unit 220 can be connected to the CAM_LXLK of the multimedia processing unit 100. The MOVALsignal of the broadcast data demodulation unit 220 indicates that the data is valid, and /BKERR (/Error out) signal maintains a high logical state in normal demodulation and is inverted only when the packets reception ends or an error occurs while demodulating the packet. By using these characteristics of the control signals MOVAL and /EKERR and setting the CAM_VS and CAM_HS as a drop Edge Trigger, it is possible to receive the valid data and filter the data in a duration in which the demodulation errors occur.

Accordingly, by connecting the clock (mdclock valid signal, error signals of the broadcast receiver 150 to the respective clock (CAM_CLK vertical signal (CAM_VS), horizontal signal (CAM_HS) terminals; and connecting the output data (MOD) of the broadcast receiver 100 to a data (CAM_DATA) terminal of the multimedia processing unit 100, the broadcast receiver 150 can be connected to the multimedia processing unit 100 as the camera 160.

The valid signal output from the demodulator 223 of the broadcast receiver 150 is connected to the horizontal synchronization terminal of the camera interface of the multimedia processing unit 110, and a CAM reset_out signal of the broadcast receiver 150 is connected to the vertical synchronization terminal of the camera interface. The demodulator of Zarlink has CAM reset_out terminal, and the demodulator of PN doesn't have CAM reset_out terminal. Accordingly, the demodulator of Zarlink connects as described above and the demodulator of PN connects the valid signal to V-sync and H-sync as described below. In the above configuration, the broadcast signal processed by the digital broadcast receiver is transmitted to the multimedia processing unit when the camera is deactivated.

In the case that the PNdemodulator (for example, PN2020) is used as the demodulator 223 of the broadcast receiver 150, the PN demodulator maintains the low logical state when no error occurs in a demodulation error notification signal. Note that this is opposed to the error signal characteristic of the MT demodulator. However, a basic configuration for the high and low logics to Vsync and Hsync can be set in the camera interface. The valid signal of the PN demodulator is similar to that of the MT demodulator so as to be identically set, whereby the valid signal can be directly connected to the CAM_VS and CAM_HS pins..] Such connections can be used even when the settings of the Vsync and Hsync signals cannot be changed.

By configuring the source selector 170 to having the above interface structure, the multimedia processing unit 100 can interface the outputs of the broadcast receiver 150 and the camera 160. Using the configuration of the source selector in FIG. 3, it is possible to interface the outputs of two multimedia modules. In FIG. 3, the source selector 170 is implemented with a multiplexer 173 which is controlled by the multimedia processing unit 100 through an 12C interface (multimedia interface).

If a broadcast reception mode is selected by the user, the multimedia processing unit 100 controls the multiplexer 173 to process the output of the broadcast receiver 150, and operations of the protocol processor 111, video codec 117, and audio codec 119. The multimedia processing unit 100 also, controls to transit the output (CAM_DATA, CAM_CLK, CAM_VS, and CAM_HS of the camera 160 to high impedance state. In this case, the clock (mdclock), valid signal, and error signal output from the broadcast receiver 150 are connected to the clock (CAM_CLK), vertical synchronization signal (CAM_VS), and horizontal synchronization signal (CAM_HS) terminal of the multimedia processing unit 100, respectively. Accordingly, the output of the broadcast receiver 150 is connected to the multimedia processing unit 100 such that the digital broadcast data from the broadcast receiver 150 is processed in the multimedia processing unit 100. If a camera mode is selected by the user, the multimedia processing unit 100 controls the multiplexer 173 to select the output of the camera 160 and deactivates the protocol processor 111. At the same time, the multimedia processing unit 100 controls to set the output impedance of the broadcast receiver 150 to high. Accordingly, the output of the camera 160 is connected to the multimedia processing unit 100 such that the multimedia processing unit 100 processes the data output from the camera 160. If a recording mode is selected, the multimedia processing unit 110 controls the video codec 117 and audio codec 119 to encode the video and audio data from the camera and store the encoded video and audio data into the memory 180.

The multimedia processing unit 100 processes the multimedia data in different processing schemes according to the multimedia modules. In the case of DVB-H the broadcast signal has the MPEG2 TS data structure. Accordingly, if the DVB-H broadcast signal is received, the multimedia processing unit 100 controls the protocol processor 111 to extract IP information and the video and audio codecs 117 and 119 to process the video and audio data.

A structure and operation of the broadcast receiver 150 of the mobile phone in FIG. 1 is described hereinafter in detail.

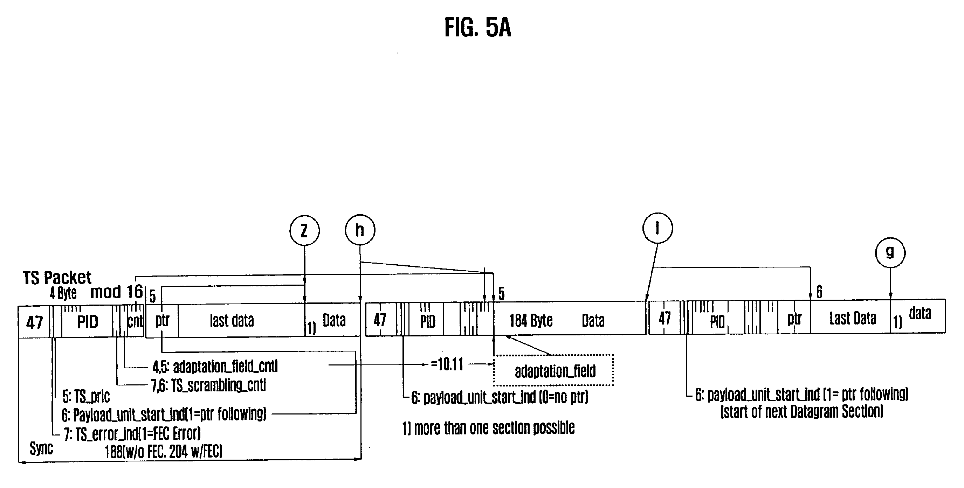

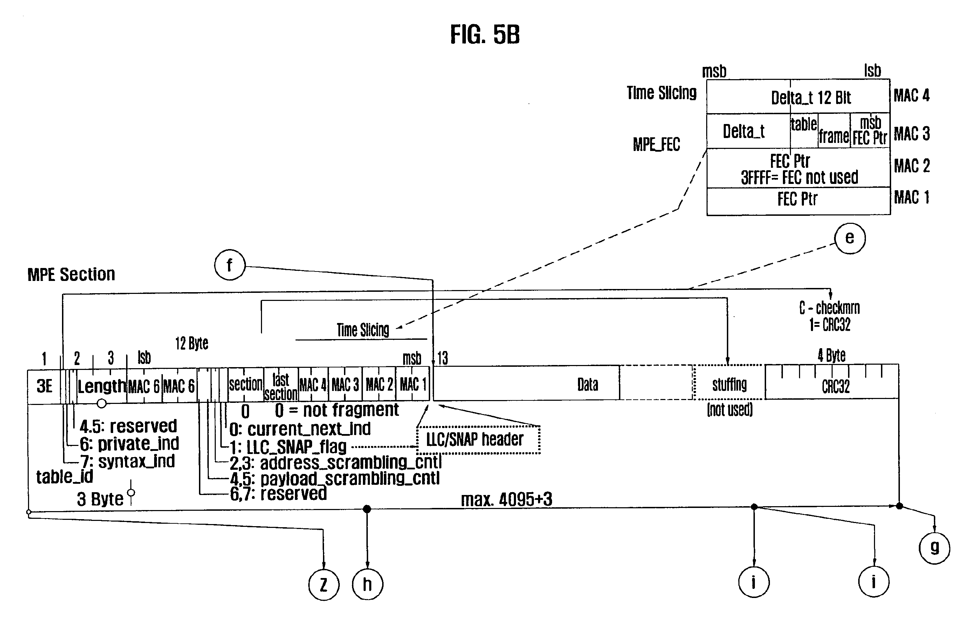

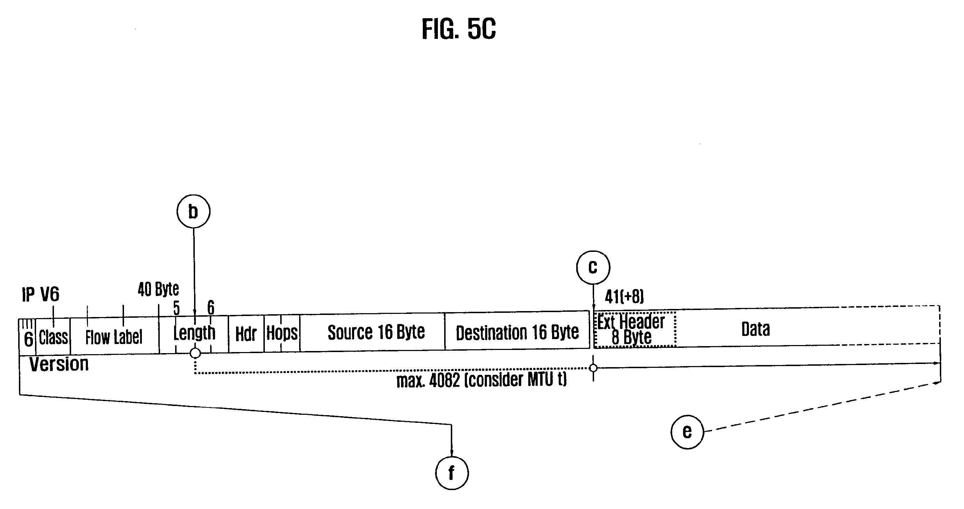

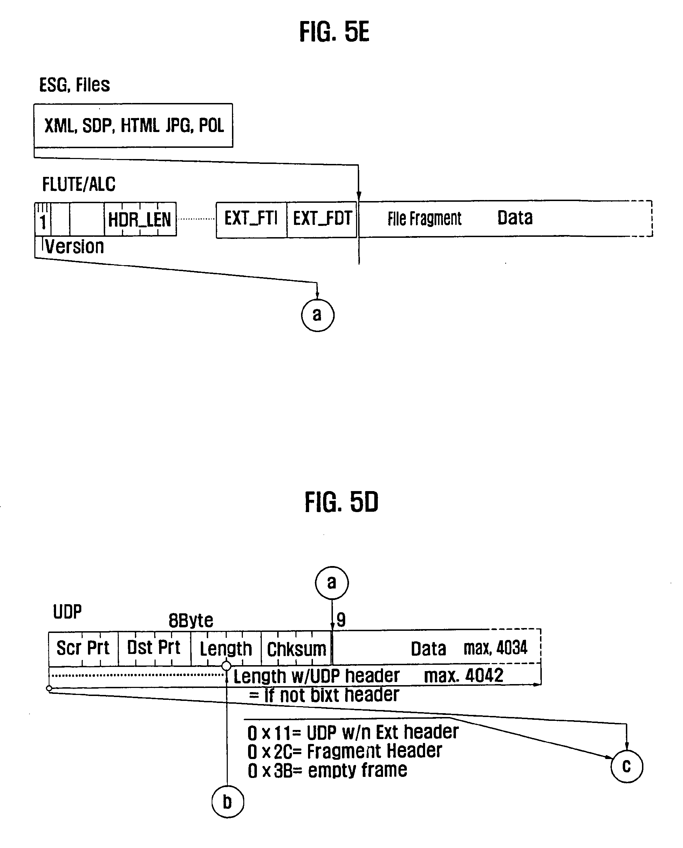

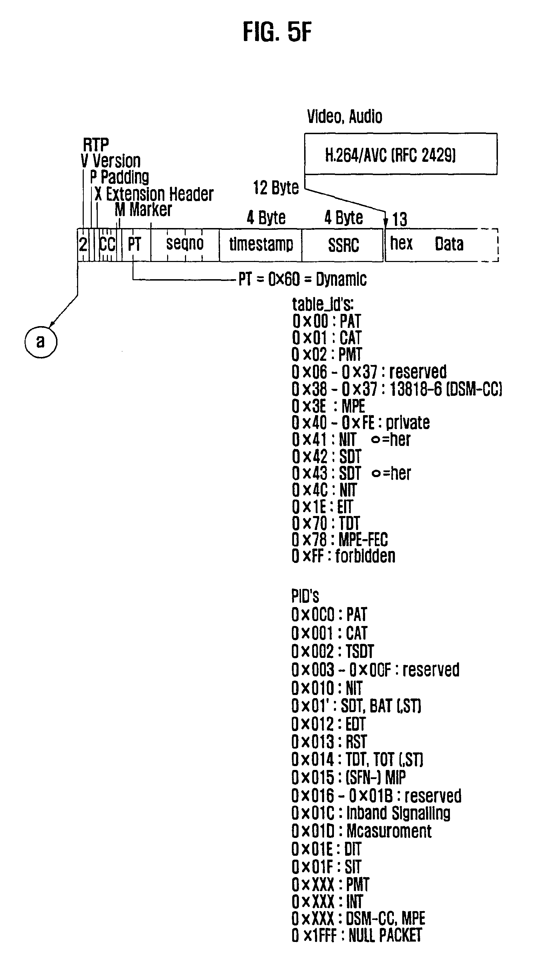

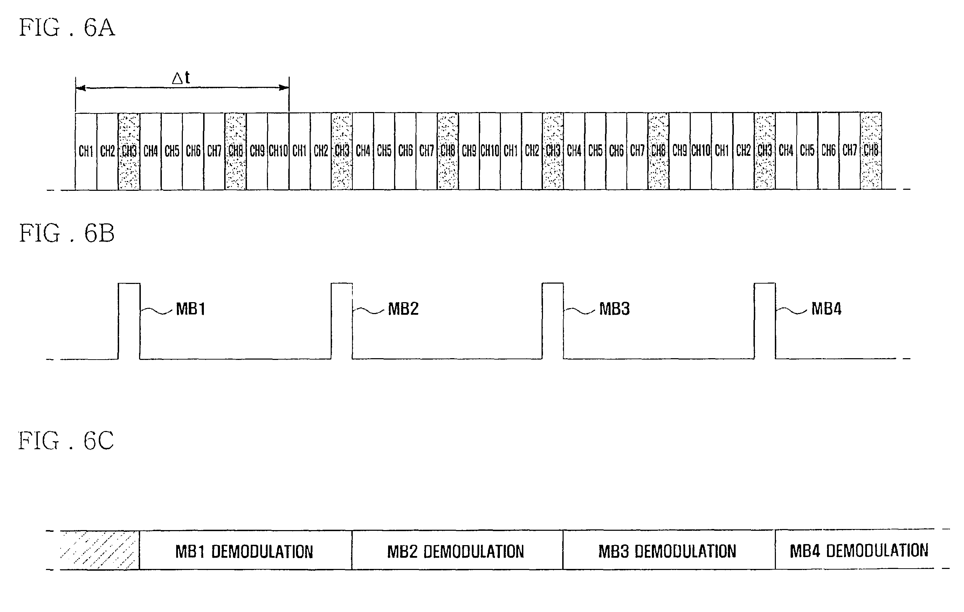

FIG. 4 is a block diagram illustrating a configuration of the broadcast receiver of the mobile phone of FIG. 1, FIG. 5 is a diagram illustrating a format of TS packet of DVB-H system, and FIGs. 6A to 6C are conceptual views illustrating demodulation operation of the broadcast receiver of FIG. 4.

In FIG. 5, the transport stream (TS) consists of a plurality of 188-byte TS packets 5A each carrying a 4-byte packet header and 184-byte payload. The packet header starts with a synchronization and PID information. The PID is used to identify the stream to which the packet belongs. The payload contains Multiprotocol Encapsulation (MPE) sections 5B; the MPE section 5B has a table identifier (table-ID), MPE forward error correction (MPE-FEC) information, and time slicing information. The MPE section contains an IP datagram 5C. The IP datagram has an IP version (IPv6 or IPv4), source IP address, and destination IP address. The IP datagram 5C contains user datagram protocol (UDP) segments 5D. The UPD segment 5D includes source and destination port information (Scr Prt and Dst Prt). The UDP segment 5D carries File Delivery over Unidirectional Transport (FLUTE)/Asynchronous Layered Coding (ALC) 5E or Real-time Transport Protocol (RTP) units 5F. The FLUTE/ALC unit 5E includes an electronic service guide (ESG) and files. The RTP unit 5F includes audio and video data.

The demodulator 223 performs demodulation on the received broadcast signal so as to output TS packet 5A. The TS packet 5A is transferred to the demodulation controller 227 after removing the packet header so as to recover a MPE section 5B. The demodulation controller 227 corrects errors of the MPE section so as to recover an IP datagram 5C. The UDP 5D, FLUTE/ALC 5E, and RTP 5F are processed by the protocol processor 111.

The time slicing and demodulation procedures are described with reference to FIGs. 6A to 6C. As described above, DVB-H multiplexes a plurality of service channels within a physical channel. The service channels are transmitted after being timely arranged and multiplexed as shown in FIG. 6A. In this embodiment, it is assumed that the channel 3 (ch3) is selected among 10 service channels (ch1 to ch10) as shown in FIG. 6A. The time duration consisting of the channel 1 to channel 10 (ch1 to ch10) is represented by Δt and the service channel ch3 is burst on the physical channel, and the remaining service channels are burst off. Accordingly, the DVB-H system supplies power to the broadcast receiver 150 to process on the selected service channel. The broadcast signal received through the service channel ch3 is demodulated as shown in FIG. 6C.

Referring to FIG. 4 again, the broadcast receiver 150 includes a tuner 210 and a broadcast data demodulation unit 220. The broadcast data demodulation unit 220 includes an analog to digital (A/D) converter 221, a demodulator 223, a PID filter 225, a demodulation controller 227, and a buffer 229The tuner 210 is set for a physical channel matching the selected service channel so as to receive the signal of the service channel on the physical channel. The tuner 210 includes a phase-locked loop (PLL) 215 for generating a frequency of the physical channel, a mixer 213 for mixing the receive broadcast signal and the frequency generated by the PLL 215, and a band pass filter 217 for filtering the signals of frequency band.

The demodulation controller 227 controls the tuner 210 to match the service channel to the physical channel frequency on the basis of a channel control signal output from the controller 115, and a PID filter 225 to be set with the PID of the selected service channel. The controller 115 analyzes a Program Specific Information/Service information (PSI/PI) output from the broadcast receiver 150 and SDP information included in an Electronic Service Guide (EPG) for checking the PID, IP and port information of the selected service channel. If the PID filtered by the PID filter 225 is a Network Information Table (NIT), Service Description Table (SDT), and Event Information Table (EIT), the controller 115 checks the PIDs of the physical channel and service channels from the Program Specific Information (PSI)/Service Information (SI). The controller 115 analyzes the SDP from a FLUTE data 5E (which can be included the ESG data) so as to check the PID, IP and port information for distinguishing the audio and video data of the service channels. Accordingly, if a service channel is selected by the user, the controller 115 outputs channel data for filtering the physical channel carrying the service channel selected by the demodulator 227 and the PID of the service channel.

The demodulation controller 227 sets the physical channel frequency carrying the service channel selected by the tuner 210 and sets the PID filter 225 with the PID of the selected service channel. The tuner 210 receives the broadcast signal on the physical channel frequency. The A/D converter 221 converts the signal output from the tuner 210 into digital data and output the digital data to the demodulator 223. The demodulator 223 demodulates the digital data so as to recover the original data. The demodulator 223 can be implemented by an OFDM or COFDM demodulator. The demodulated data can be the MPDE2 TS packet stream 5A of FIG. 5, and the TS packet includes PID information for identifying the service channel.

The PID filter 225 filters the packets having the PID of the selected service channel from the demodulated TS packet stream and transfers the PSI/SI to the controller 115. The output of the PID filter 225 includes the Multiprotocol Encapsulation - Forward Error Correction (MPE-FEC) and time slicing information, as shown at 5B of FIG. 5. If the MPE-FEC and time slicing information is offered, the demodulation controller 227 performs a time slicing control on the received burst data. That is, the demodulation controller 227 controls power supply to the tuner 210 and the demodulator 223 on the basis of the time slicing information. The time slicing information includes information on the burst-on time of the selected service channel, and the demodulation controller 227 controls to supply the power to the tuner 210 and the demodulator in the burst-on duration of the selected service channel and shut down the power in the rest time. The demodulation controller 227 performs the MPE-FEC function on the data of the service channel output from the PID filter 225 on the basis of the MPE section information, as shown at 5B of FIG. 5.

As described above, the demodulation controller 227 controls the tuner 210 according to the channel control data output from the controller 115 so as to set the physical channel frequency for the selected service channel, and sets the PID filters 225 with the PID of the selected service channel.

The demodulation controller 226 also controls the time slicing operation for reducing the power consumption of the broadcast receiver and MPE-FEC function for correcting errors of the received signal to enhance the reception rate, using the MPE section information. The output data of the demodulation controller 227 can be the IP datagram, as shown at 5C of FIG. 5.

The tuner 210 is set for the physical channel matching the selected service channel, and the demodulator 223 converts the output signal into digital data and then demodulates the digital data. The demodulated data has an MPEG TS format, as shown at 5A of FIG. 5, with PID information for identifying the service channels corresponding to the physical channel. The PID filter 225 analyzes the PID of the demodulated data and selectively outputs the demodulated data having the PSI/SI PID and the PIDs of the main and sub service channels. The data having the PID associated with the PID list of PSI/SI are transferred to the controller 115 and the broadcast data on the selected service channel and the broadcast information including the ESG are transferred to the demodulation controller 227. The demodulation controller 227 controls the time slicing and error correction on the data of the service channels filtered with the PIDs by analyzing the MPE section data, as shown at 5B of FIG. 5.

FIG. 7 is a flowchart illustrating an operation of a broadcast receiver of a mobile phone according to the present invention.

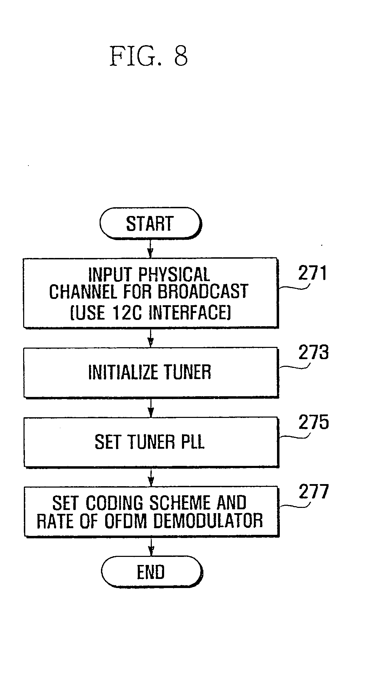

In FIG. 7, the broadcast receiver 150 sets a physical channel of the tuner 210 (S241). FIG. 8 is a flowchart illustrating the physical channel setting procedure of FIG. 7 in detail.

Referring to FIG. 8, a control signal for setting a frequency of the broadcast channel from the multimedia processing unit 100, the demodulation controller 227 detects the control signal (S271) and initializes the tuner 210 (S273). Next, the demodulation controller 227 sets the PLL 215 of the tuner 210 to the physical channel frequency (S275). After setting the PLL 215, the demodulation controller 227 sets a coding scheme, a code rate, and a guard interval of the demodulator 223 (S227).

After the physical channel is set, the tuner of the broadcast receiver 150 starts outputting broadcast signals received on the physical channel. At this time, the broadcast receiver 150 converts the output signal of the tuner 210 into digital data (S243), demodulates the digital data (S245), and filters the data having an appropriate PID from the demodulated digital data (S247). FIG. 9 is a flowchart illustrating a PID filtering procedure of FIG. 7 in detail.

Referring to FIG. 9, the broadcast receiver 150 extracts PID of the TS packet output from the demodulator 233 (S291) and then determines whether the PID of the TS packet is identical to the PID designated for the broadcast channel selected by the user (S293). If the PID of the TS packet is identical to the PID of the selected broadcast channel, the broadcast receiver 150 analyzes the PID of the TS packet (S295) and then controls the power controller 230 to supply power to the tuner 210 and the broadcast data demodulation unit 220 in accordance with the time slicing information (S297). If the PID of the TS packet is not identical to that of the broadcast channel, the broadcast receiver 150 stops filtering the PID.

Next, the broadcast receiver 150 extracts time slicing information (S251) and stores the extracted time slicing information (S253) in FIG. 7. The broadcast receiver 150 buffers the MPE section/FEC section (S255) and then determines whether all burst data are successfully received (S257). If all the burst data is not successfully received, the broadcast receiver 150 repeats steps S243 to S257. If all the burst data are successfully received, the broadcast receiver 150 decodes the buffered MPE section/FEW section in a Reed-Solomon decoding scheme (S259) and returns to step S243. In FIG. 7, the steps marked by dotted line can be performed at the demodulation controller 227.

FIG. 10 is a diagram illustrating a configuration of the protocol processor 111 of the mobile phone of FIG. 1.

Referring to FIG. 10, the protocol processor 111 processes IP and other protocol information of the selected service channel data and extracts video and audio data and broadcast information. The video codec 117 decodes the video data output from the protocol processor 111 so as to display through the display 191. The audio codec 119 decodes the audio data output from the protocol processor 111 so as to output through the speaker 197. The broadcast information is transferred to the controller 100.

The protocol processor 111 includes an IP decapsulator 310, UDP decapsulator 320FLUTE deliverer 330, and RTP deliver 340.

The selected service channel data input to the IP decapsulator 310 is an IP datagram including a source IP address and destination IP address, as shown at 5C of FIG. 5. The IP decapsulator 310 extracts the IP information by decapsulating the IP datagram. The UDP decapsulator 320 receives UDP segments contained in the payload of the IP datagram and extracts source port address and destination port address (Scr Prt and Dst Prt) by decapsulating the UDP segments, as shown at 5D of FIG. 5. The payload of the UDP segment contains the FLUTE/ALC protocol data units and RTP data units such that the UDP decapsulator 320 transfers the FLUTE/ALC data units to the FLUTE deliverer 330 and the RTP data units to the RTP deliverer 340.

In the case of FLUTE/ALC data unit, the payload can be contained with ESG or data files such as XML, SDP, HTML, JPG, POL, etc. The ESG and data files are decoded by the data codec under the control of the controller 115. In the case of RTP data unit, the payload can be contained with audio and video data and the audio and video data are decoded by the audio and video codecs 117 and 119, respectively.

In order to process the FLUTE data, the controller 115 can be provided with an ESG engine (XML engine and ESG decoder), a SPD parser, a PSI/SI decoder, a protocol information controller and managers for controlling and managing protocol processes. The controller 115 processes the protocol information and data received from the protocol processor 111. That is, the controller 115 analyzes the PSI/SI information (NIT, SDT, EIT) extracted by the broadcast receiver 150 for checking the PSI/SI in accordance with MPEG-2 and DVB-SI standards and controls the general operations of the broadcast receiver 150 by parsing SDP (a main data set of broadcast) of the ESG data from the protocol processor 111. The service channels, ESGs of the service channels, and audio and video data are identified on the basis of the PID, IP information, and port information. That is, the PSI/SI and SDP is provided with tables for defining the identifiers of the service channels, and audio, video, and ESG identifiers of each service channel. Accordingly, the controller 115 can identify the service channel, audio and video data, and ESG data with reference to the PSI/SI decoding result and SDT. The protocol processor 111 can be integrated into the controller 115.

The controller 115 controls paths of the broadcast receiver 150 and the protocol processor 111. Most of the MPEG2 TS stream and IP datagram carry the audio and video data. That is, most of the portions of the data burst are audio and video data. The controller 115 analyzes the data received on the service channel, operates the elements in accordance with the analysis result, and sets the signal paths between the elements. For example, if an MPE section is received, the controller 115 controls the demodulation controller 227 to operate for receiving burst information and analyzes the MPE section data for performing the timing slicing and MPE-FEC functions. If an IPv6 data is received, the controller 115 controls the IP decapsulator 310 to extract IP information. If a UDP data unit is received, the controller 115 controls the UDP decapsulator 310 to extract the port information. If a Flute/ALC data unit is received the controller 115 controls the FLUTE deliverer 330 for processing the ESG and files. If an RTP data unit is received, the controller 115 controls the RTP deliverer 340 to process the RTP data unit and transfer video and audio data to the video and audio codecs 117 and 119. That is, the controller checks the protocols associated with the received data and activates the elements responsible for the identified protocols. Other elements that are not involved in processing the received data bypass the data.

If the protocol processor 111 output the video and audio data, the video codec 117 decodes the video data to output through the display 191, and the audio codec decodes the audio data to output through the speaker 197. The video codec can be implemented with H.264 video decoder or MPEG series decoder, and the audio codec 119 can be implemented with an AAC audio decoder.

The operation of the camera 160 is described hereinafter in detail. The output of the camera 160 includes an image data, a synchronization signal, and a pixel clock. In the camera mode, the source selector 170 is coupled to the output of the camera 160, and the power controller 140 supplies a driving power to the camera 160. The camera data taken by the camera 160 is transferred to the multimedia processing unit 100 via the source selector 170. At this time, the controller 115 controls the camera image to be input to the video codec 117. A size of the camera data may differ based on screen size. The color data of the camera 160 may differ from those to be presented by the display 191. Accordingly, the video codec 117 reformats the camera data to fit on the display 191. In order to record the camera data, the camera data is encoded by the video codec 117 before storing into the memory 180. In a case that a sound recording mode is activated, the controller 115 controls the video and audio codecs 117 and 119 to encode the video data input through the camera 160 and audio data input through the microphone 195, respectively.

The video and audio codecs 117 and 119 can be provided with decoders for decoding the video and audio data input from outside and stored in the memory 180 and encoders for encoding the video and audio data input from the camera 160. The codecs can be implemented with a plurality of encoders and decoders in accordance with coding and decoding schemes.

FIG. 11 is a block diagram illustrating a configuration of the video codec of the mobile phone according to the present invention.

The video codec 117 includes an encoder 513 and a decoder 523. The encoder 513 includes an MPEG4, JPEG, H.264, and H263 encoding modules, and the decoder 523 includes MPEG4, JPEG, H264, and H263 decoding modules. The encoder 513 and decoder 523 can, respectively, include other encoding and decoding modules conforming to another encoding/decoding standard such as MPEG2. The video decoder can be implemented with a scaler for scaling the multimedia data for fit to the display 191 and converting the color data of the multimedia data to color data of the display 191.

Referring to FIG. 11, the video encoder 513 is provided with a plurality of encoding modules and selects one of the encoding modules under the control of the controller 115. The selected encoding module encodes the raw data 511 from the camera and broadcast receiver and then stored the encoded data into the memory 180. If a data transmission mode is activated, the encoded data is transmitted through the RF unit 140 under the control of the controller 115. When recording the digital broadcast signal, the received broadcast signal is stored directly into the memory 180 since the broadcast signal are encoded data, and the video decoder 523 of the video codec 117 decodes the broadcast signal to be displayed through the display 191.

The video decoder 523 selects one of the decoding modules under the control of the multimedia processing unit 100 such that the selected decoding module decodes the encoded video data (received DVB video data and multimedia data stored in the memory 180). The size and color model of the decoded data may differ from those supported by the display 191. In this case, the size and color model of the decoded data should be rescaled and converted to be appropriate for the display 191. Accordingly, the decoded data is displayed through the display unit 191 after rescaled in size and converted in color model by the scaler 525.

FIG. 12 is a flowchart illustrating an operation of the video codec of FIG. 11.

Referring to FIG. 12, the video codec 117 performs encoding, decoding, and scaling on the input video data (S551, S553, S571, and S591) under the control of the controller 110.

If the video data is raw image data not encoded, the video codec 117 detects the raw image data (S551 and S553) and inputs the raw image data. At this time, the multimedia processing unit 100 determines a coding scheme for the input image data and selects an encoding module corresponding to the selected coding scheme (S557 and S559). The selected encoding module performs encoding on the image data (S561 and S563) and then stores the encoded image data into the memory 180 (S565). If a transmission mode is activated, the encoded video data is transmitted through the RF unit 140 under the control of the multimedia processing unit 100.

If the video data is coded image data, the video codec 117 detects the coded image data (S551 and S571) and input the coded image data (S573). At this time, the multimedia processing unit 100 determines a decoding scheme for the coded image data and selecting a decoding module corresponding to the selected decoding scheme (S575 and S579). The selected decoding module performs decoding on the encoded image data (S577 and S581) and then displays the decoded data on a screen of the display unit 191. The decoded image data may have a size and color model different from those supported by the display 191. Accordingly, the video codec 117 determines whether the decoded image data is required to be scaled under the control of the multimedia processing unit 100. If it is required to scale the decoded image, the video codec 117 performs scaling on the decoded image data on the basis of the scaling information from the multimedia processing unit 100 (S583) and then display the scaled image data on the screen of the display unit 191. If the scaling is not required, the selected decoding module of the video codec 117 directly displays the decoded image data on the screen of the display unit 191 (S585).

The image data can be displayed on the screen of the display unit 191 without going through a coding or decoding process. The image data can be a video data output from the camera 160. In this case, the video codec 117 receives scaling information and performs scaling on the decoded data (S583) and then outputs the scaled data through the display unit 191. In the case that the color model of the decoded image data differ from that supported by the display 191; a color model conversion can be performed while scaling the decoded image data.

As described, the video codec 117 receives control information on the coding, decoding, and scaling from the multimedia processing unit 100 and operates the encoding and decoding modules and/or scaler for processing the input data. The encoder encodes the input image data in the selected coding scheme and stores the coded image data into the memory 180. The decoder decodes the coded image data in the selected decoding scheme. If a scaling is required, the scaler scales the decoded images data before transmitting the decoded data to the display 191.

FIG. 13 is a block diagram illustrating a configuration of the audio codec of the mobile phone according to the present invention, and FIG. 14 is a flowchart illustrating an operation of the audio codec of FIG. 13.

The configuration of the audio codec of FIG. 13 is similar to that of the video codec of FIG. 11, and the operation of the audio codec is similar to the operation of the video codec of FIG. 12. Accordingly, detailed descriptions of the audio codec and the operation of the audio codec are omitted.

The above structured multimedia processing apparatus enables receiving the digital broadcast signals, processing camera data, and audiovisual telephony. In the present invention, the multimedia processing apparatus is a mobile phone. The multimedia processing unit 100 includes the protocol processor 111, video codec 117, and audio codec 119. The general operation of the multimedia processing unit 110 is controlled by the controller 115. The controller 115 controls the overall elements of the multimedia processing unit 100.

FIG. 15 is a flowchart illustrating an operation of a mobile phone according to an embodiment of the present invention.

Referring to FIG. 15, the controller 115 waits a key input in an idle mode (S701) and determines whether a signal is input through a keypad 193 or on a menu screen (S703). If a signal is input, the controller 115 selects a multimedia module (S705, S707, and S709). If a DVB-H module (broadcast receiver) is selected, the controller 115 controls the source selector 170 and power controller 130 to connect the output of the broadcast receiver 150 to the multimedia processing unit 100 and supplies power to the broadcast receiver 150 (S711 and 713). The controller 115 also outputs channel control information and demodulation control information for setting a physical channel frequency of the broadcast receiver 150 such that the broadcast receiver 150 receives the broadcast signal of the service channel selected by the user and perform demodulation on the received broadcast signal. The controller 115 controls the multimedia processing unit 100 to operate the protocol processor 111, video decoder corresponding to the video codec 117, and audio decoder corresponding to the audio codec 119. When a size and a color model of an image representing the DVB-H broadcast signal differs from the screen size and color model support by the display 191, the controller 115 controls the scaler 525 to reformat the image of the broadcast signal to fit for the screen size and color model supported by the display 191. Next, the controller 115 processes the DVB-H broadcast signal received through the broadcast receiver 150 (S717). The DVB-h broadcast signal is processed according to the procedure of FIG. 16.

If the camera 160 is selected, the controller 115 controls the source selector 170 and the power controller 130 to connect the output of the camera 160 to the multimedia processing unit 100 and supplies power to the camera 160 (S721 and 723). The controller 150 initializes the camera 160 and the microphone 195 to play and record the video signal input through the camera 160 and audio signal input through the microphone 195 (S725). The controller 115 controls the multimedia processing unit 100 to disable the operation of the protocol processor 111, to operate the video encoder corresponding to the video codec 117 and audio encoder corresponding to the audio codec, and to operate the scaler 525 of the video codec 117 for scaling the video signal to be fit for the screen size of the display 191 and converting the color model of the video signal into a color model supported by the display 191. If a recording mode is disabled, the video codec 117 and the audio codec 119 are deactivated and the video data input through the camera 160 is reformatted by the scaler 525 in the size and color model so as to be displayed on the screen of the displayer 191. Next, the controller 115 processes the video and audio data input through the camera 160 and the microphone 195 (S727). The video data input through the camera 160 is processed according to the procedure of FIG. 17.

If an audiovisual telephony is selected, the controller 115 controls the source selector 170 to connect the output of the camera 160 to the multimedia processing unit 100, and the power controller 130 to supply power to the camera 160 (S731). The controller 115 also initializes the camera 160, RF unit 140, speaker 195, display 191, and microphone 195 to transmit, play back, and record the video data input through the camera 160 and the audio data input through the microphone 195(S733). The controller 115 controls the multimedia processing unit 110 to disable the protocol processor 111 and operate specific video and audio encoders of the video and audio codecs 117 and 119. The controller 115 also controls the scaler 525 to scale the size of the video image and convert a color model of the video image to be displayed on a screen of the display 191. When the recording mode is deactivated, the controller 115 controls to disable the video codec 117 and audio codec 119 but to enable the scaler 525 to rescale the video image input through the camera 160 and/or the RF unit 140 for fit to the screen size of the display 191. Next, the controller 115 controls to play the video and audio data input through RF unit 140 and to transmit the video and audio data input through the camera 160 and the microphone 195 through the RF unit 140. The audiovisual telephony function is operated according to a procedure of FIG. 16.

FIG. 16 is a flowchart illustrating a procedure for processing DVB-H broadcast signal in the mobile phone according to the present invention.

Referring to FIG. 16, if a service channel of the DVB-H system is selected by a user, the controller 115 detects the selection of the service channel (S751) and configures an interface for connecting the broadcast receiver 150 to the multimedia processing unit 100 (S753). At this time the interface configuration is performed by controlling a coordination of the power controller 130 and the source selector 170 in association with the broadcast receiver 150.

Next, the controller 155 initializes the broadcast receiver 150 and the multimedia processing unit 100 (S755). The initialization of the broadcast receiver 150 is performed by setting a physical channel of the tuner 210 corresponding to the service channel selected by the user and a PID of the selected service channel at the broadcast data demodulation unit 220. The multimedia processing unit 110 activates the protocol processor 111 and selects video and audio decoders from the video and audio codec 117 and 119. If a recording mode is activated, the multimedia processing unit 110 controls the demultiplexer 113 to demultiplex the video and audio data and store the demultiplexed video and audio data into the memory 180.

The broadcast receiver 150 can be structured as shown in FIG. 4. The tuner 210 of the broadcast receiver 150 received the broadcast signals on the physical channel frequency of the DVB-H system; and the broadcast data demodulation unit 220 converts the broadcast into a digital signal, demodulates the digital signal, extracts the broadcast signal having a PID set by the user by filtering process, and accumulates the filtered broadcast signal in the buffer 229.

The broadcast data queued in the buffer 229 has a format of the IP datagram, as shown at 5C of FIG. 5. The buffered data is transferred to the multimedia processing unit through the source selector 170 (S757). The broadcast signals are received as data bursts as shown in FIG. 6A, such that the broadcast data demodulation unit 220 filters the data bust using the PID of the selected service channel. If the buffering is complete, the broadcast data demodulation unit 220 generates an interrupt signal to transmit the buffered data to the multimedia processing unit 110 in a direct memory access (DMA) scheme. That is, the broadcast receiver 150 demodulates the burst broadcast signals and transmits the demodulated broadcast signals to the multimedia processing unit 100.

If the broadcast signal is input, the controller 115 performs decapsulation on the IP datagram, as shown at 5C of FIG. 5, to obtain the FLUTE data unit, as shown at 5E of FIG. 5 and RTP data unit, as shown at 5F of FIG. 6, carrying the video and audio data (S759). The FLUTE data unit is transferred to the controller 115, and the RTP data unit is transfer the video and audio codecs 117 and 119. The protocol processing is performed by the protocol processor 111 which identifies the protocols associated with the transmission of the broadcast data. The FLUTE data are processed by the data codec of the controller 115, and the RTP data including video/audio data are processed by the video and audio codecs 117 and 119, respectively. That is the controller 150 controls to process the DVB-H broadcast signal in accordance with the operation mode (playback mode and recording mode) selected by the user.

In the playback mode, the controller 115 detects the activation of the playback mode (S763); transfers the buffered video and audio data to the video decoder of the video codec 117 and the audio decoder of the audio codec 119, respectively (S765); and decodes the video and audio data by means of the video and audio codecs 117 and 119 (S767). The video decoding can be performed at the video codec 117 structured as shown in FIG. 11 according to the decoding procedure of FIG. 12, and the audio decoding can be performed at the audio codec 119 structured as shown in FIG. 13 in accordance with the decoding procedure of FIG. 14. Next, the controller 115 controls to display the decoded video data on the screen of the display 191 and outputs the decoded audio data through the speaker 197 (S769). Until an instruction for stopping the playback (S711), the process returns to the step 795 such that the controller 115 repeats playback procedure.

As described above, in the DVB-H playback mode, the broadcast receiver 150 demodulates the broadcast signals and buffers the demodulated broadcast signals. The buffered data is transferred to the multimedia processing unit 100 in the DMA scheme. The multimedia processing unit 100 checks the protocols associated with the received data, and decodes the data in accordance with the associated protocols so as to be played on the screen of the display 191. The data burst carries a data amount to be played for 1 to 4 seconds.

In the recording mode, the controller 115 detects the activation of the recording mode (S773) and performs recording and playback. The broadcast signal can be directly recorded without encoding process or recorded after being encoded in a different coding scheme. That is, the received video and audio signals are already coded signals such that the video and audio signals can be directly stored without undergoing an encoding process in a normal recording mode. However, in a case of recording the broadcast signal in different coding scheme, the received broadcast signals are decoded and then stored after being encoded in the new coding scheme.

In the normal recording mode, the controller 115 detects the activation of the normal recording mode (S775 and S787), and decodes the video and audio data in consideration of the protocols associated with the received broadcast data (S789 and 791). After decoding the video and audio data, the controller 115 stores the demultiplexed video and audio data into the memory 180, while playing the decoded video and audio data (S785). The steps S789 and S791 can be performed similar to the steps S765 and 767.

In the case of recording the broadcast data in a different format, the controller 115 controls to decode the received broadcast data into video and audio data after protocol processing and play the video and audio data, and encode the decoded video and audio data in the newly set coding scheme and store the newly encoded video and audio data into the memory 180 (S781 and 785). The steps S777, S779, 5781, and S783 are performed similar to the steps S765 and 767.

As described above, if the DVB-H mode is selected, the controller 115 5 controls the power controller 130 and the source selector 170 such that the output of the broadcast receiver 150 is connected to the multimedia processing unit 100, and sets a frequency corresponding to the service channel selected by the user and PID of the service channel for the broadcast receiver 150. The controller 115 also sets the video and audio function for processing the DVB-H broadcast signals. The broadcast receiver 150 demodulates the broadcast signals, buffers the demodulated signals, transmits the buffered signals to the multimedia processing unit 100, and generates an interrupt after completing the transmission. Whenever the interrupt is detected, the controller 115 performs the protocol processing to extract the video and audio data and decodes the video and audio data by means of respective video and audio decoders. In the recording mode, the video and audio data are directly stored in the memory 180 without the encoding process, while playing the video and audio data. If the broadcast data is required in a different format, the received broadcast data is decoded and stored in the memory after being encoded in a new coding scheme.

There are 4 events that may occur while receiving the digital broadcasting signals. The events include a broadcast end, channel switching, playback, and recording. The broadcast end can be performed by a program termination call. If a channel switching occurs, the broadcast receiver 150 is set by a frequency channel corresponding to the service channel selected the user and the PID of the service channel. The playback and recording can be performed according to the procedure of FIG. 16.

FIG. 17 is a flowchart illustrating a procedure for processing video signal input through a camera of the mobile phone according to the present invention.

Referring to FIG. 17, in a camera mode, the controller 115 detects the activation of the camera (S811) and configures an interface for connecting the output of the camera 160 to the multimedia processing unit 100 (S 813). The interface configuration can be performed in cooperation with the power controller 130 and the source selector 170. In this case, the protocol processing function is disabled. The camera 160 includes an image sensor and a signal processor for converting an image projected on the image sensor into digital data. Next, the controller 115 checks an operation mode selected by the user (5815). The operation mode includes a preview mode, still image recording mode, and a motion image recording mode.

If the preview mode is selected, the controller 115 detects the activation of the preview mode (S817) and sets a scaling value of the video codec (S819). In the preview mode, the image taken by the camera is not stored but only displayed on the screen of the display 191. Accordingly, the controller 115 controls to scale up or down the image taken by the camera for fitting to the screen size of the display 191 (S821) and then display the scaled image on the screen of the display 191. The scaling operation can be performed by the scaler 525 of the video codec 117. Since the color model of the camera 160 may differ from that of the display 191, for example YUV color model for the camera 160 and RGB color mode for the display 191, the video codec 117 can be provided with a color converter in addition to the scaler. In this case, the controller 115 performs the color conversion process in addition of scaling process (S821).

If the still image recording mode is selected, the controller 115 detects the activation of the still image recording mode (S825) and sets a coding scheme for coding the video data input through the camera 160 (S829). The coding scheme is for encoding a still image (for example, video data for a video frame) and can be for example a JPEG or GIF coding scheme. After setting the coding scheme, the controller 115 encodes the video data in the coding scheme (S835) and then store the corded video data into the memory 180 (S835). In the still image recording mode, the still image taken by the camera 160 is displayed on the screen of the display 191 for a preset duration. The controller 115 performs scaling on the video data (S833) and then display the scaled video data on the screen of the display 191 (S835).

The still image recording mode is activated by pressing a "save key" in the preview mode. The coding scheme for the still image can be set by the user. If the coding scheme is not set, a preset default setting is adopted. If the preview mode is activated, the controller 115 displays the video data input through the camera 160 (S817 to S823). If a save key is pressed while displaying the video data, the controller 115 encodes the video data captured when the save key is pressed in the preset coding scheme and storing the memory 180 (S829 and S835). The captured video data is displayed for predetermined time duration and then the camera 160 enters to the preview image recording mode again.

If the motion image recording mode is selected, the controller 115 detects the activation of the motion image recording mode (S837) and sets a coding scheme for coding the video data input through the camera 160 (S841). The motion image coding scheme can be set by the user. If the motion image coding scheme is not set, a preset default coding scheme is adopted. The motion image can be recorded together with the audio signal input through the microphone 195. The controller 115 sets coding schemes of the video and audio data (S841). Next, the controller 115 encodes the video data input through the camera 160 in a selected video coding scheme and audio data input through the microphone 195 in a selected audio scheme (SS843). The video data coding can be performed with the video codec 117 configured as in FIG. 11 according to the procedure of FIG. 12, and the audio data coding can be performed with the audio codec 119 configured as in FIG. 13 according to the procedure of FIG. 14. Next, the controller 115 stores the video coding data into the memory (S845). When the motion image recording mode is activated, the video and audio data are scaled and output through the display 191 and speaker 197, respectively, while being stored into the memory. That is, the controller 115 scales up/down the video data input from the camera 160 (S833), displays the scaled video data through the display 191 (S835), and outputs the audio data input through the speaker 197.

During the operation of the motion image recording mode, the multimedia processing unit 100 displays the video image through the display 191 as in preview mode while recording the motion image signals input through the camera 160. The multimedia processing unit 100 sets the encoders for encoding the video and audio data for the motion image recording, encodes the video and audio data in the preset coding schemes, and stored the coded video and audio data in to the memory while displaying the vide data through the display 191 after size scaling and color model conversion and outputting the audio data through the speaker 197.

FIG. 18 is a flowchart illustrating an audiovisual telephony operation of the mobile phone according to the present invention.

Referring to FIG. 18, if an audiovisual telephony function is selected, the controller 115 detects the activation of the audiovisual mode (S851) and configures the interface for connecting the camera 160 to the multimedia processing unit 100 (S853). The interface configuration is performed in cooperation with the power controller 130 and the source selector 170. At this time, the protocol processing function is disabled. The camera 160 includes an image sensor and a signal processor for converting an image projected on the image sensor into digital data. Next, the controller 115 checks the audiovisual telephony signal (S855). If the audiovisual signal is an outgoing signal, the controller 115 encodes video data input through the camera 160 and audio data input through the microphone 195 and transmits the encoded video and audio data through the RF unit 140 (S857). If the audiovisual signal is an incoming signal, the controller 115 decodes the video and audio signal input through RF unit 140 and outputs the decoded video and audio through the display 191 and speaker 197, respectively.

In a transmission procedure of the audiovisual telephony, the controller 115 selects video and audio coding schemes (S859). Next, the controller 115 encodes the video data input through the camera 160 in the selected video coding scheme and the audio data input through the microphone 195 in the selected audio coding scheme (S861) and then transmits the coded video and audio data through the RF unit 140 (S863). At step 863, the video data can be scaled for fitting to the display 191.

In a reception procedure of the audiovisual telephony, the controller 115 selects video and audio decoding schemes (S869) if an audiovisual telephony signal is received through the RF unit 140. Next, the controller 115 decodes the audiovisual telephony signal in the selected video and audio decoding schemes (S869) and then outputs the decoded video and audio data through the display 191 and speaker 197, respectively. The decoded video data can be scaled for fitting to the display 191.

As described above, if the audiovisual telephony function is activated, the multimedia processing unit 100 selects the coding and decoding schemes. The outgoing video and audio signals are encoded in the selected coding schemes and then transmitted through the RF unit 140. The incoming video and audio signals are decoded in the selected decoding schemes and then outputs through the display 191 and speaker 197. In the audiovisual telephony mode, the incoming video data is displayed on the screen of the display 191. The outgoing video data can be displayed in the form of Picture-In-Picture. This procedure continues until the audiovisual telephony mode ends. If a communication termination is detected (S865), the controller 115 ends the audiovisual telephony mode.

As described above, the mobile phone of the present invention includes multimedia processing unit which can process the signals input from different multimedia modules including a broadcast receiver. In order for the multimedia processing unit to process the signals input from different multimedia modules, the mobile phone is provided with a source selector 170 for interfacing the different multimedia modules and a power controller 130 for supplying power to the selected multimedia module. The multimedia processing unit 100 controls a cooperation of the elements so as to appropriately process the multimedia data input from a selected multimedia module. The multimedia processing unit 100 controls the video and audio codecs to select the encoder and decoder for processing the multimedia data. The video and audio codecs can be shared by the multimedia modules.

A multi-channel output operation for simultaneously displaying the multimedia data input from multiple multimedia modules is described hereinafter. In this embodiment, the multimedia modules are the broadcast 150 and camera 160. The multi-image display can be implemented with the PIP. A main channel video data is displayed on the entire screen and a sub channel video data is displayed at a portion in the main channel video data. The main channel video data are displayed with a playback of audio data, and the sub channel video data is displayed without audio output.

FIG. 19 is a block diagram illustrating a configuration of a mobile phone according to the present invention.

The configuration of the mobile phone of FIG. 19 is identical with that of the mobile phone of FIG. 1 except for the multi source processing unit 113. The multi source processing unit 113 multiplexes the multiple video data input from the codec 117 so as to simultaneously display multiple video images on a screen of the display 191.

The controller 115 controls general operation of the mobile phone according to user commands input through a keypad 195. The user commands include source selection command for selecting main and sub sources, and playback command. In this embodiment, the broadcast receiver 150 and the camera 160 are selected as the main and sub sources, respectively. If the main and sub sources are selected, the controller 115 detects an activation of the multi source processing mode and controls the multi source processing unit 113 to display the main and sub images on the screen of the display 191.

In this embodiment, the broadcast receiver is a DVB-H broadcast receiver. The DVB-H system uses time slicing technique for receiving the broadcast signals such that the DVB-H broadcast receiver operates only in timeslots assigned for a selected service channel. Accordingly, the controller 115 controls to receive the broadcast signals through the timeslots assigned to the selected channel and multimedia signals from other multimedia module through the rest timeslots in cooperation with the power controller 130 and the source selector 170. The other multimedia module is the camera.

FIGs. 20A to 20D are conceptual views illustrating a timing control for processing multimedia data input from multiple source in the mobile phone of FIG. 19.

Referring to FIGs. 20A to 20D, a DVB-H frequency channel consists of time multiplexed service channels. In FIG. 20A, the physical channel transmits 9 service channels (ch1 to ch9) and second service channel ch2 is selected. The time duration from the first service channel ch1 to ninth service channel ch9 is Δt (channel burst). The data is burst on at the second service channel and burst off at the remaining service channels. The power controller 130 is controller to supply power to the broadcast receiver 150 during a timeslot assigned for the second service channel ch2, and the source selector 170 is controlled such that the broadcast receiver 150 to transmit connects the received broadcast signals to the multimedia processing unit 100 during the time slot assigned for the second service channel ch2. The multimedia processing unit 100 processes the broadcast signals received through the service channel ch2 in Δt.

The power controller 130 can be configured as shown in FIG. 2A. The power controller 130 provides power to the broadcast receiver 150 in a pattern as shown in FIG. 20B and to the camera 160 in a pattern as shown in FIG. 20C. In FIGs. 20B and 20C, the power controller 130 supplies the power to the broadcast receiver 150 and shuts down the power to the camera 160 for broadcast service channel duration. At this time, the source selector 170 selects the output of the broadcast receiver 150. On the other hand, the power controller 130 supplies the power to the camera 160 and shuts down the power to the broadcast receiver 160 for the rest time durations.

In the multi source processing mode, a power supply duration corresponds to At. The broadcast receiver 150 operates in a timeslot assigned for a selected service channel, and the camera 160 operates in the remaining timeslots. The output of camera 160 is provided to the multimedia processing unit 100 in a pattern of FIG. 20D.

In the above structured mobile phone, if a main and sub multimedia sources are selected by the user, the multimedia processing unit 100 receives the multimedia data from the selected main and sub multimedia sources per Δt and simultaneously displays the multimedia data from the main and sub multimedia sources on a screen of the display 191. The multimedia data from one of the main and sub multimedia sources are played with audio data. In this embodiment, the multimedia data from the main multimedia source are played with the audio data. If the multi image display is supported, the mobile phone can display multiple images from at least two different multimedia sources. In this embodiment, the broadcast receiver 150 is the main multimedia source, and the camera 160 is the sub multimedia source.

FIG. 21 is a block diagram illustrating a multimedia processing unit of a mobile phone according to the present invention.

Referring to FIG. 21, in order to simultaneously display pictures representing the multimedia data from the broadcast receiver 150 (DUB-H) and camera 160 (CAM), the video codec 117 is provided with a main video input buffer 410, a sub video input buffer 415, a main video output buffer 420, and a sub video output buffer 425. Since the video data input from the broadcast receiver 150 are coded data, the video codec 117 decodes the coded video data from the broadcaster receiver 150 by means of a decoder 523, and the video data input from the camera 160 is rescaled by the scaler 525 to be fit for the display 191. If a recording mode is set for the multimedia data input from one of the broadcast receiver 150 and camera 160, an encoder 513 is activated so as to perform encoding the multimedia to be recorded. A detailed description on the recording operation is omitted.

The video data input from the broadcast receiver 150 via the protocol processor 111 are buffered in the main video input buffer 410, and the video data input from the camera 160 is buffered in the sub video input buffer 415. The controller 115 controls the video codec 117 to select a decoder 523 for decoding the multimedia data from the broadcast receiver 150 and to operate the scaler 525 for recalling the multimedia from the camera 160. The controller 115 controls to transfer the video data (DVB-H video data) buffered in the main video input buffer 410 to the decoder 523 of the video codec 117, to transfer the video data buffered in the sub video input buffer 415 to the scaler 525 of the video codec 117. The DVB-H video data is displayed in real time as main video data. The DVB-H video data is decoded in accordance with a video decoding control signal. The video decoding control signal includes a Decoding Time Stamp (DTS) and a Presentation Time Stamp (PTS). The DTS is a decoding start signal for controlling a time for decoding video frame data in the decoder 523 of the video codec 117, and the PTS is a presentation control signal for controlling a time for presentation of the video data stored in a main video output buffer 420.

If the DTS signal is generated, the decoder 523 starts decoding the DVB-H video data buffered in the main video input buffer 410 and buffering the decoded DVB-H video data in the main video output buffer 420.

If the PTS signal is generated, the decoder 523 starts decoding the DVB-H video data buffered in the main video input buffer 410 and buffering the decoded DVB-H video data in the main video output buffer 420, and outputs the decoded DVB-H video data buffered in the main video output buffer 420.

The camera video data buffered in the sub video input buffer 415 is transferred to the scaler 525 of the video codec 117. The scaler 525 rescales the camera video data to be fit for the display 191 and adapts the video data to the color model of the display 191. If a sub video data recording mode is enabled, the controller 115 transfers the camera video data to the encoder 523 such that the encoder 523 encodes the camera video data and stores the encoded video data in the memory 180.

The DVB-H video data is received through the timeslots assigned for the service channel selected by the user, and the camera video data is received through the remaining timeslots. The multi source processing unit 113 processes the DVB-H video data and the camera video data to be simultaneously displayed through the display 191 in the form of multi image screen (for example, PIP).

As described above, the decoded DVB-H video data and the camera video data are processed as the main and sub video data presenting on the screen of the display 191. The main video data is displayed in full screen mode, and the sub video data is displayed in a window mode so as to be presented at a portion of the screen, i.e. in PIP mode. In the PIP mode, the sub video data can be processed as such or can be resized. A frame data resizing can be performed by the multi source processing unit 113. When the main and sub video data are simultaneously displayed on the screen, the screen can be split so as to display the main and sub video data in same size. Also, the sub video data can be displayed in a window formed at a potion of the main video data displayed in the full screen mode. In this case, the sub video data window can be fixed at a specific potion of the screen and moved according to a user's manipulation.

FIGs. 22A to 22C are block diagrams illustrating configurations of a multi source processing unit of a mobile phone of FIG. 19.

In FIGs. 22A to 22C, main and sub video output buffers 430 and 435 can be identical with the main and sub video output buffer 420 and 425 of FIG. 21, respectively. That is, the main and sub video output buffers 420 and 425 of the multimedia processing unit can be shared by the video codec 117 and the multi source processing unit 113.

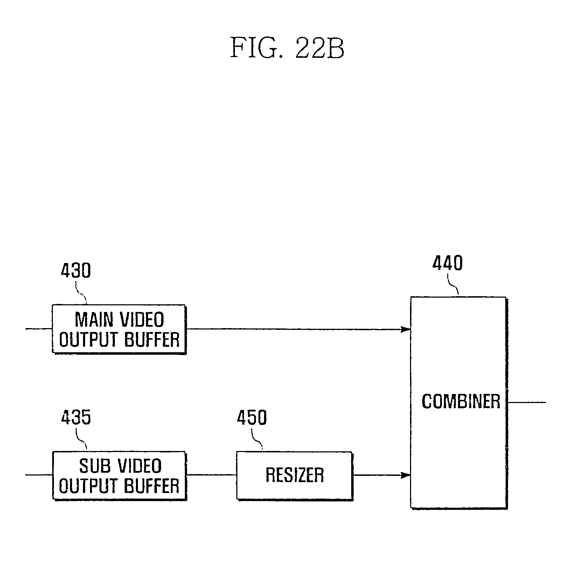

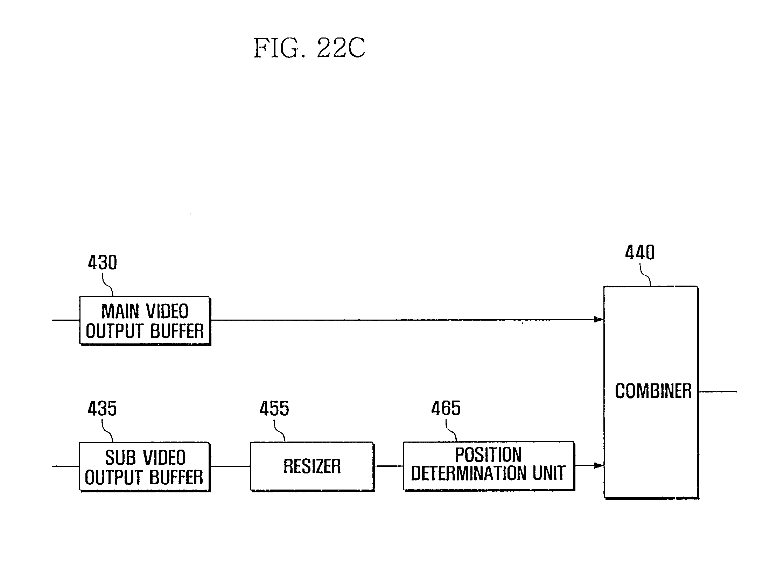

In the configuration of the multi source processing unit of FIG. 22A, the sub video data input to the sub video output buffer 435 are resized video data processed by the video codec or raw video data the video codec 117 and the sub video data is displayed at a fixed location on the screen of the display 191. In the configuration of the multi source processing unit of FIG. 22B, the sub video data is resized by as resizer 450 in accordance with a user setting or in a preset size and the sub video data is displayed at a fixed location on the screen of the display 191. In the configuration of the multi source processing unit of FIG. 22C, the sub video data is resized in accordance with a user setting or in a preset size, and a presentation location of the sub video data on the screen of the display 191 is determined by the user.

In FIGs. 22A to 22C, the multi source processing unit 113 is provided with a sub video output buffer 435; however, the number of the sub video output buffers can be changed according to a number of activated multimedia sources. That is, the DVB-H video data and the camera data are selected to be simultaneously displayed in this embodiment, however more than two multimedia sources including a main video source can be selected to be simultaneously displayed on the screen of the display 191. In this manner, the multimedia video data input from more than two multimedia sources can be processed in cooperation of multiple input and output buffers and the video codec 117.

In a multi picture display mode, locations and sizes of the main and sub video data should be previously set. For example, if the multi picture display mode is a PIP mode (in which the main and sub video data are called PIP background image and PIP overlay image), a PIP overlay image is displayed at a fixed location in a fixed size on a PIP background image in the screen. The display location and size of the PIP overlay image can be set by the user. If the location and size of the PIP overlay image are determined, the controller 115 controls a combiner 440 to display the PIP background image and PIP overlay image on the screen per frame. In a case that the display 191 supports 1600*900 resolution, the size and display location of the PIP overlay image can be set by 451 to 900 lines and 801^{1h} to 1600^{th} pixels. The controller 115 generates a display control signal for assign the 1^{st} line to 450^{th} line of the screen for the PIP background image. Next, in order to output the pixel data of the 451 th line to the 900^{th} line, the controller 115 generates display control signals for assigning the video data of the PIP background image to the 1^{st} pixel to 800^{th} pixels and assigning the video data of the PIP overlay image to the 801th to 1600the pixels.

As described above, the controller 115 outputs the display control signals to the combiner 440 for displaying the video data buffered in the main video output buffer 430 for the PIP background image region on the screen and displaying video data buffered in the sub video output buffer 435 for the PIP overlay image region on the screen. That is, the combiner 440 combines the video data from the main video output buffer 430 and the sub video output buffer 435 so as to display the PIP background and overlay image at the corresponding regions on the screen of the display 191 according to the display control signals generated by the controller 115.

The combiner 440 can be implemented with a multiplexer or a blender.

In the case that the combiner 440 is implemented with a multiplexer, the controller 115 the multiplexer to multiplex the video data of the PIP background image and the PIP overlay image corresponding to the PIP background and overlay image display regions on the screen of the display 191. That is, the multiplexer outputs the PIP background image data to the PIP background image region and PIP overlay image data to the PIP overlay image region, on the screen of the display 191. Accordingly, the PIP overlay image is displayed in the PIP background image.

In the case that the combiner 440 is implemented with a blender, weights to be added to the main video data for the PIP background image and the sub video data for the PIP overlay image. By adding the weights (0 for main video data and 1 for sub video data) to the video data, the sub video data are displayed in the preset PIP overlay image region.

If the weights for the sub video data are set higher than those for the main video data, the sub video data are displayed as the PIP overlay image on the screen of the display 191.

Referring to FIG. 22A, the main video output buffer 430 buffers the DVB-H video data decoded at the video codec 117, and the sub video output buffer 435 buffers the camera video data output from the video codec 117.

In the multi source processing unit 113 of FIG. 22A, the size and location of the PIP overlay image are preset. In this case, the size and location of the PIP overlay image cannot be changed by the user. Accordingly, the combiner 440 output the DVB-H video data and the camera video data, respectively, buffered in the main video output buffer 430 and the sub video output buffer 440 to the display 191 under the control of the controller 115.

Referring to FIG. 22B, the main video output buffer 430 buffers the main video data processed by the video codec 117, and the sub video output buffer 435 buffers the sub video data processed by the video codec 117. In the multi source processing unit 113 of FIG. 22A, the size of the PIP overlay image can be changed and the location of the PIP overlay image is fixed on the screen. Accordingly, the user can change the size of the PIP overlay image but not the display location.

The broadcast data buffered in the sub video output buffer 435 can be modified in size on the screen of the display 191. The size of the PIP overlay image can be selected by the user and fixed by default. That is, the size of the PIP overlay can be selected or not on a multi source display setting screen. In this case, the controller 115 determines aspect ratios of the PIP overlay window to be changed by the user or a fixed aspect ratio. The aspect ratios are set for the resizer 450. The resizer 450 can be replaced by the scaler. The scaler can maintains of the PIP overlay image by regularly trim pixels according to the aspect ratio of the PIP overlay image window. The scaler can select pixels occupying specific area of the entire video data and display the PIP overlay image with the selected pixels.

The combiner 440 displays the video data buffered in the main video output buffer 430 as the PIP background image on the screen of the display 191 and then displays the video data buffered in the sub video output buffer 435 as the PIP overlay image on the screen of the display 191. The combiner can be implemented with a multiplexer or a blender.

In the multi source processing unit of FIG. 22C, the size and location of the PIP overlay image can be changed by the user. The main video output buffer 430 buffers the main video data processed by the video codec 117, and the sub video output buffer 435 buffers the sub video data processed by the video codec 117. The resizer 455 changes the size of the sub video data buffered in the sub video output buffer 435 to be fit for the PIP overlay image window.

The sub video data can be displayed at a fixed position on the screen of the display 191, and the position can be decided by the user. In this case, the controller 115 controls a position determination unit 465 to determine a position for arranging the sub video data on the screen. When the multi video display mode is activated, the position of the PIP overlay image representing the sub video data can be set by the user. If the position of the PIP overlay image is set by the user, the controller 115 controls the position determination unit 465 to locate the position of the sub video data on the screen of the display 191. If a position of the PIP overlay image is not set by the user, the controller 115 controls the position determination unit 465 to output the sub video data at a default position on the screen of the display 191.

The combiner 440 outputs the main video data buffered in the main video output buffer 430 to the display 191 and then outputs the sub video data buffered in the sub video output buffer 435 to display at the position of the PIP overlay image on the screen of the display 191. The combiner 440 can be implemented with a multiplexer or a blender.

In FIG. 22C, the resizer 455 and the position determination unit 465 are arranged between the sub video output buffer 435 and the combiner 440 in series. In this case, the controller 115 controls the resizer 465 and the position determination unit 465 to determine the size and location of the PIP overlay image according to the user selection.

By structuring the multi source processing unit 113 as shown in FIG. 22C, the sub video data can be displayed as the PIP overlay image in a preset size at a preset position on the screen, while the main video data are displayed as the PIP background image.

Although the multi source processing unit 113 of FIG. 22C includes resizer 455 and position determination unit 465, the resizer 455 can be omitted. In this case, the size of the PIP overlay image is fixed, and the position of the PIP overlay image can be reset by the user.

In FIGs. 22A to 22C, the present invention is explained only with one PIP overlay image, however, the multi source processing unit 113 can be implemented so as to simultaneously display multiple PIP overlay images.

In order to simultaneously display the main video data and sub video data, the screen can be split such that the main and sub video data are displayed in the same size. In this case a resizer for resizing the main video data can be used. That is, two resizers are required for resizing the main and sub video data and the two resizers process the main and sub video data so as to be displayed respective regions formed by splitting the screen. If the main video data is not displayed in a full screen mode even when the sizes of the main and sub video data differ from each other, the resizer can be used for resizing the main video data.

A multi image display operation of the above structured mobile phone is described hereinafter.

FIG. 23 is a flowchart illustrating a multi image display procedure for a mobile phone according to an embodiment of the present invention.

Referring to FIG. 23, if a multi image processing function request is input by a user, the controller 115 controls to show the multimedia modules selected as a main video data source and at least one sub video data source. In this embodiment, it is assumed that the main multimedia data source is a broadcast receiver 150 and the sub multimedia data source is a camera 160. If the broadcast receiver 150 is selected as the main multimedia data source, the controller 115 operates the broadcast receiver 150 (S901). If a service channel is selected by the user, the controller 115 sets a PID, IP address, and ports number assigned to the selected service channel. The PID can be checked by analyzing PSI/SI received from the broadcast receiver 150, and the IP and port information can be checked using SDP information of an ESG.

If the camera 160 is selected as the sub multimedia data source, the controller 115 operates the camera 160 (S903). At this time, the controller 115 can set a size and location of the sub video data on a screen. If the size of the sub video data is not set, a default size is used. If presentation location information is input, the controller 115 controls the multi source processing unit 113 to located the position of the sub video data. If the presentation location information is not input, the sub video data is displayed at a default position.

After selecting the main and sub video data sources and setting the size and location of the sub video data, the controller 115 controls the power controller 130 and the source selector 170 to collect data from the broadcast receiver 150 and the camera 160. The controller 115 controls such that the power controller 130 to supply power to the broadcast receiver 150 in the timeslot assigned for the selected service channel (for example, channel ch3 in FIG. 6A and channel ch2 in FIG. 20A) so as to couple the output of the broadcast receiver 150 to the multimedia processing unit 100, and the controller 130 to supply power to the camera 160 in the rest timeslots so as to couple the output of the camera 160 to the multimedia processing unit 100.

The controller 160 operates the multimedia modules and processes the multimedia output form the multimedia modules in such manner. If the video data are input, the controller 115 determines whether the multimedia data is input from a main video data source or a sub video data source (S905). If the multimedia data is input from the main video data source, i.e. the broadcast receiver 150 (S905), the controller 115 controls the video and audio codecs 117 and 119 to process the video and audio data of the multimedia data, respectively. Next, the controller 115 controls the multi source processing unit 113 to process the video data to be output as main video data (S911) and display the main video data on the screen of the display 191 as a PIP background image. If the multimedia data is input from the sub video data source, i.e. the camera 160 (S905), the controller 115 controls the video codec 117 to process the video data from the camera 150 (S909). Next, the controller 115 controls the multi source processing unit 113 to process the video data to be output as sub video data (S911) and display the sub video data on the screen of the display 191 as a PIP overlay image (S913). If the termination command is not input, the controller 115 returns to the step 905 and repeats the input video data processing at step 915. As described above, if the main multimedia source is the broadcast receiver 150 and the sub multimedia source is the camera 160, the controller 115 controls the decoder 523 of the video codec 117 to decode the video data input from the broadcast receiver 150 (S907), and the scaler 525 of the video codec 117 to scale the video data input from the camera 160 and convert color model of the video data for fitting to the display 191 (S907). Next, the controller 115 controls the multi source processing unit 113 to resize the camera video data to a preset PIP overlay image and multiplex (or blend) the resized camera video data with the broadcast receiver video data such that the camera video data is displayed as a PIP overlay image at a position on the PIP background image representing the broadcast receiver video data (S911). The main video data and sub video data can be presented in display windows whose sizes are identical with each other and can be presented in the form of PIP. The sub video data can be displayed in a fixed size sub video window or in a resizable sub video window of which size can be changed by the user. The position of the sub video window can be fixed on the screen of the display 191 or changed by the user's manipulation on the screen of the display 191.

FIG. 24A is a flowchart illustrating a procedure for multiplexing main and sub video data in a mobile phone according to an embodiment of the present invention. In FIG. 24A, the sub video image is resized to the sub video window and the sub video window, as a PIP overlay image, is displayed on the main video window, as a PIP background image.

Referring to FIG. 24A, the controller 115 controls to resize the video data buffered in the sub video output buffer 435 to a predetermined sub video window size (S931). At this time, the size of the sub video window can be fixed or resizable by the user. The resizing function can be implemented with a scaler, which can resize the sub video image by rescaling entire pixels or selecting pixels in an area of the sub video image. While or after resizing the sub video image, the controller 115 controls to output the video data buffered in the main video output buffer 430 to the display 191 (S933). The controller 115 detects a sub video image display region on the screen (S935) and then multiplexes or blends the sub video data and the main video data (S937). By multiplexing or blending the sub video data and the main video data, the main video data are displayed as the PIP background image and the sub video data are displayed as PIP overlay image. While displaying the PIP overlay image, the sub video data may or may not be blended with the main video data.

The PIP background image and PIP overlay image can be simultaneously displayed by multiplexing the main video data and resized sub video data at a preset position on the screen. The above explained processes are performed per frame. Accordingly, the PIP background image and PIP overlay image are simultaneously displayed on the screen of the display 191 frame by frame.

If a multiplexing of the main and sub video data is complete for a frame, the controller 115 detects the completion of multiplexing (S939) and returns for multiplexing the main and sub video data for generating a next frame.

The multiplexing is performed by setting a PIP overlay window region for displaying the sub video data and projecting the sub video data in the PIP overlay window region and main video data on the entire screen except for the PIP overlay window region.

FIG. 24B is a flowchart illustrating a procedure for multiplexing main and sub video data in a mobile phone according to the present invention.

Referring to FIG. 24B, the controller 115 controls to load the video data buffered in the main and sub video output buffer 430 and 435 every frame duration (S951 and S953) and to perform resizing the sub video data (S955). Next, the controller 115 controls to output the main and sub video data while blending the sub video data with the main video data at a portion corresponding to a screen region assigned for displaying the sub video data (S957). In order to blend the main and sub video data, weight values are assigned for the pixels corresponding to the sub video data. The controller 115 controls to buffer the video data obtained by blending the main and sub video data in a final output buffer and then to display the blended video data on the display 191 (S959).

The DVB-H data received in the pattern of FIG. 20B has data amount that can be played during Δt. In the case of the camera data input in the pattern of FIG. 20C, the input of the camera data is broken while the camera 160 is turned off (i.e. while the DVB-H data is input). In this case, the controller 115 displays the camera video data included in a last frame while the camera 160 is turned off.

If an incoming call event occurs while displaying multiple images, the controller 115 generates an alarm for notifying the incoming call. At this time, the user can set an incoming call alarm mode. Incoming call alarm mode includes a normal incoming call alarm mode and mute incoming call alarm mode. If the normal incoming call alarm mode is set, the controller 115 controls to output a preset alarm sound (melody, bell, music, etc.) through the speaker 197 and to display an announcement message notifying the incoming call. The mute incoming call alarm mode includes a vibration alarm mode and a display alarm mode.

If a vibration alarm mode is set, the controller 115 drives a motor for vibrating the mobile phone and displays a phone number of the caller on the display 191. If the display alarm mode is set, the controller 115 displays an announcement message notifying the incoming call together with a phone number of the caller. The incoming call notification message can be displayed in a blinking manner. Also, the incoming call notification message can be displayed as a front image while the main and sub video data are displayed on the screen.

The incoming call alarm mode can be set such that the display alarm mode is automatically activated in the broadcast receiver mode since the user may be watching a broadcast program in the broadcast receiver mode.

While operating the multi source processing mode, it is possible for the user to make an outgoing call. That is, the digital broadcast system provides various service channels such that the user can interactively make a request or response while watching the program. For example, a shopping channel provides a return channel for allowing the user to order goods. Also, an entertainment or game channel may require the viewers to take part in an event or game. In this case, it is preferred that the RF unit 140 is used as an uplink channel since the broadcast receiver is a unidirectional device. In this case, the controller 115 may check information on the service channel (for example, a phone number of a department associated with program of the service channel).

In the case of DVB-H receiver, the controller 115 can checks a phone number and IP address associated with the program of the current service channel from ESG data. In the case of DMB receiver, the controller 115 can obtain phone numbers associated with the program of the service channel from EPG data. If the user try to make an outgoing call (for example, pressing a "send" key), the RF unit 140 establishes a service channel and a communication channel. If a preset order key (for example, buy or vote key) is pressed after the channels are established, the controller 115 controls to send a message to a person associated with the program of the service channel. Also, a response message can be received through the communication channel.

When the main and sub video data are simultaneously displayed on the display 191, a cursor can be position on a service channel image to request an outgoing call, by a keypad manipulation. In this case, the controller 115 can checks the positions of the main and sub video data on the screen of the display 191. Accordingly, if the user locates the curser at a specific position on the screen for requesting an outgoing call, the controller 115 detects the position of the curser and then collects information on a current program of the service channel so as to perform dialing on the basis of the communication information (for example, phone number or IP address) of the program of the service channel.

If the outgoing call mode is activated, the user can communicate with a counterpart person associate with the service channel in real time.

As described above, the multimedia processing apparatus and method for a mobile phone of the present invention provides a common interface capable of interfacing multimedia data input from a digital broadcast receiver and another built-in multimedia module, whereby it is possible to simultaneously display two video images input from different multimedia sources on a screen.

Although exemplary embodiments of the present invention are described in detail hereinabove, it should be clearly understood that many variations and/or modifications of the basic inventive concepts herein taught which may appear to those skilled in the present art will still fall within the spirit and scope of the present invention, as defined in the appended claims.

## Claims

1. A multimedia processing apparatus comprising:
a first multimedia module for receiving and demodulating broadcast data to produce first multimedia data;
a second multimedia module for generating second multimedia data;
a selector for selecting one of the first and second multimedia modules and interfacing with the first and second multimedia modules;
a multimedia processing unit including a protocol processor and video and audio codecs, the protocol processor and the audio and video codecs being activated according to a source selection signal when the first multimedia module is selected, and only the audio and video codecs being activated when the second multimedia module is selected; and
a display for displaying multimedia data processed by the multimedia processing unit.

2. The multimedia processing apparatus of claim 1, wherein the first multimedia module is a digital broadcast receiver including a tuner for setting a physical channel for receiving broadcast data of a service channel and a broadcast data demodulator for demodulating the broadcast data, and the second multimedia module is a camera.

3. The multimedia processing apparatus of claim 2, wherein the selector outputs, when the camera is selected, a camera pixel clock, horizontal and vertical synchronization signal, and camera data, as a broadcast pixel clock, valid signal, and broadcast data, respectively.

4. The multimedia processing apparatus of claim 3, wherein the video codec that includes least one video encoder and at least one video decoder and the audio codec comprises at least one audio encoder and at least one audio decoder, and the multimedia processing unit further comprises a controller for operating, when the broadcast receiver is selected, the protocol processor and video and audio decoders from the audio and video codecs, and operating, when the camera is selected, the video and audio encoders from the audio and video codecs for encoding the camera data.

5. The multimedia processing apparatus of claim 4, wherein the broadcast data demodulator is a Digital Video Broadcasting-Handheld (DVB-H) receiver that includes a demodulation module for demodulating the received broadcast data, a product identifier filter for filtering service data of selected service channel from the demodulated broadcast data, and a demodulation controller for performing an error correction on the service data and generating a time slicing control signal for activating the tuner and the demodulator in timeslots assigned for the selected service channel.

6. The multimedia processing apparatus of claim 5, further comprising a power controller for controlling power supply to the broadcast receiver according to the time slicing control signal of the demodulation controller.

7. The multimedia processing apparatus of claim 6, wherein the protocol processor processes Internet Protocol (IP) datagrams in the broadcast data, User Datagram Protocol (UDP) segments, encapsulated in the IP datagram, and File Delivery over Unidirectional Transport (FLUTE) data and Real-time Transport Protocol (RTP) data encapsulated in the UDP segments, and transfers the FLUTE data units and RTP data to corresponding decoders.

8. The multimedia processing apparatus of claim 7, wherein the video codec comprises:
at least one video decoder for decoding video data of the received broadcast data and encoded video data stored in the memory;
at least one video encoder for encoding the camera data input from the camera; and
a scaler for scaling data output from the video decoder in size of a screen of the display.

9. The multimedia processing apparatus of claim 8, wherein the scaler includes a color converter for converting a color model of the data output from the video decoder into a color model supported by the display.

10. The multimedia processing apparatus of claim 8, wherein the controller generates a broadcast receiver selection signal for activating the broadcast receiver and a demodulation control signal for selecting a timeslot assigned for the physical channel corresponding to the service channel, operates a video decoder of the video codec and an audio encoder of the audio codec corresponding to video and audio coding schemes of the broadcast video and audio data, and displays the broadcast video data output from the protocol processor on the display.

11. The multimedia processing apparatus of claim 8, wherein the controller generates a camera selection signal for activating the camera and selects encoders of the video and audio codecs for encoding the camera data output from the camera and storing the encoded camera data in the memory in a camera recording mode, and scales the camera data by means of a scaler of the video codec to output to the display.

12. The multimedia processing apparatus of claim 3, wherein the broadcast data demodulator comprises:
a demodulation module for demodulating the received broadcast data;
a PID filter for filtering service data of a selected service channel from the demodulated broadcast data; and
a demodulation controller for performing an error correction on the service data and generating a time slicing control signal for activating the tuner and the demodulator in timeslots assigned for the selected service channel.

13. The multimedia processing apparatus of claim 12, wherein the multimedia processing unit comprises:
a protocol processor for separating the audio and video data and broadcast information from the broadcast data;
a video codec including at least one video encoder and decoder;
an audio codec including at least one audio encoder and decoder;
a multi image processor for outputting a multi picture screen image for presenting the broadcast video data and the camera video data as main and sub video images, respectively; and
a controller for generating a source selection signal for selecting a broadcast receiver in a timeslot assigned for a service channel of the broadcast receiver, operates, when the broadcast receiver is selected, the protocol processor and decoders from the video and audio codecs corresponding to a coding scheme adopted to the broadcast data, and transfers, when the camera is selected, the camera data to the multi image processor.

14. The multimedia processing apparatus of claim 13, further comprising a power controller for supplying power for driving the broadcast receiver and the camera according to the source selection signal generated by the controller.

15. The multimedia processing apparatus of claim 14, wherein the multi image processor comprises:
a resizer for resizing the video data from a second multimedia module to a preset image size; and
a combiner for combining the video data from the first and second multimedia modules so as to output as the multi video image.

16. The multimedia processing apparatus of claim 15, wherein the multi image processor includes a position determination unit for determining a position of a video data input from the second module on the display.

17. A multimedia processing apparatus comprising:
a radio frequency (RF) unit for radio communication with a mobile communication system;
a broadcast receiver for receiving and demodulating broadcast signal;
a camera;
a selector for selecting one of outputs from the broadcast receiver and the camera and interfacing the camera as the broadcast receiver;
a multimedia processing unit including a protocol processor and video and audio codecs, the protocol processor and the audio and video codecs being activated according to a source selection signal when the output of the broadcast receiver is selected, and only the audio and video codecs being activated when the camera is selected;
a memory for storing data obtained by processing the outputs under the control of the multimedia processing unit; and
a display for displaying the data output from the multimedia processing unit.

18. The multimedia processing unit of claim 17, wherein the selector outputs, when the camera is selected, a camera pixel clock, horizontal and vertical synchronization signal, and camera data, as a broadcast pixel clock, valid signal, and broadcast data, respectively.

19. The multimedia processing unit of claim 18, wherein the multimedia processing unit comprises:
a protocol processor for separating the audio and video data and broadcast information from the broadcast data;
a video codec including at least one video encoder and decoder;
an audio codec including at least one audio encoder and decoder; and
a controller for operating, when the output of the broadcast receiver is selected, the protocol processor and decoders of the video and audio codecs, operating, when the output of the camera is selected, encoders of the audio and video codecs for encoding camera data, and controlling, when an audiovisual telephony mode is activated, the video codec to encode the camera data with outgoing voice and transmit the encoded data through the RF unit, and to decode incoming video data and voice signal and display the decoded video data on a screen of the display.

20. The multimedia processing apparatus of claim 19, wherein the broadcast data demodulator is a Digital Video Broadcasting-Handheld (DVB-H) receiver that includes a demodulation module for demodulating the received broadcast data, a PID filter for filtering service data of a selected service channel from the demodulated broadcast data, a demodulation controller for performing an error correction on the service data and generating a time slicing control signal for activating the tuner and the demodulator in timeslots assigned for the selected service channel

21. The multimedia processing apparatus of claim 20, further comprising a power controller for controlling power supply to the broadcast receiver according to the time slicing control signal of the demodulation controller.

22. The multimedia processing apparatus of claim 21, wherein the protocol processor processes Internet Protocol (IP) datagrams in the broadcast data, User Datagram Protocol (UDP) segments, encapsulated in the IP datagram, and File Delivery over Unidirectional Transport (FLUTE) data and Real-time Transport Protocol (RTP) data encapsulated in the UDP segments, and transfers the FLUTE data units and RTP data to corresponding decoders.

23. The multimedia processing apparatus of claim 22, wherein the video codec comprises:
at least one video decoder for decoding video data of the received broadcast data and encoded video data stored in the memory;
at least one video encoder for encoding the camera data input from the camera; and
a scaler for scaling data output from the video decoder in size of a screen of the display.

24. The multimedia processing apparatus of claim 23, wherein the scaler includes a color converter for converting a color model of the data output from the video decoder into a color model supported by the display.

25. A multimedia processing method for a mobile phone including a broadcast receiver and a camera, comprising the steps of:
extracting, when the broadcast receiver is selected, broadcast information and video and audio data from broadcast data received by the broadcast receiver by protocol-processing the broadcast data;
decoding the video and audio data;
displaying the decoded video data;
converting, when the camera is selected, camera data input from the camera into the broadcast data; and
displaying the converted camera data.

26. The multimedia processing method of claim 25, wherein converting the camera data comprises:
changing camera pixel clocks into broadcast pixel clocks;
changing horizontal and vertical synchronization signals of the camera data into valid signals of the broadcast data; and
changing camera information of the camera data into broadcast information of the broadcast data.

27. The multimedia processing method of claim 26, further comprising:
demodulating the broadcast data; and
decoding the broadcast information and the video and audio data in respective coding schemes.

28. The multimedia processing method of claim 27, wherein demodulating the broadcast data comprises:
generating a time slicing control signal for enabling the broadcast receiver to receive the broadcast data in timeslots assigned for a selected service channel;
demodulating the broadcast data received in the timeslots;
extracting program data of the selected service channel from the extracted broadcast data; and
correcting errors in the program data.

29. The multimedia processing method of claim 28, further comprising storing, if a broadcast recoding mode is activated, the video and audio data in the memory.

30. The multimedia processing method of claim 26, wherein converting camera data comprises:
rescaling, if a camera preview mode is activated, the camera data in a preset display size; and
encoding, if a camera recording mode is activated, the camera data and storing the encoded camera data.

31. A multimedia processing method for a mobile phone including a broadcast receiver and a camera, comprising:
activating, when a multi source processing mode is set, the broadcast receiver for timeslots assigned for a service channel and activating the camera for remaining time slots, according to a time slicing control signals;
extracting, when the broadcast receiver is activated, broadcast information and broadcast video and audio data by protocol-processing broadcast data received by the broadcast receiver;
decoding the broadcast video and audio data;
buffering the decoded broadcast video and audio data;
converting, when the camera is activated, camera data input from the camera into the broadcast video data representing camera video data;
buffering the camera video data;
multiplexing the broadcast video data and the camera video data; and
simultaneously displaying the broadcast video data as a main picture and the camera video data as a sub picture on a screen.

32. The multimedia processing method of claim 31, wherein converting the camera data comprises:
changing camera pixel clocks into broadcast pixel clocks;
changing horizontal and vertical synchronization signals of the camera data into valid signals of the broadcast data; and
changing camera information of the camera data into broadcast information of the broadcast data.

33. The multimedia processing method of claim 32, wherein displaying the broadcast video data as a main picture and the camera video data as a sub picture comprises:
resizing the camera video data to fit for a size of the sub picture; and
overlaying the sub picture on the main picture.

34. The multimedia processing method of claim 33, wherein displaying the broadcast video data as a main picture and the camera video data as a sub picture further comprises determining a position at which the sub picture is displayed on the main picture.

35. A multimedia processing method for a mobile phone including a broadcast receiver and a camera, comprising the steps of:
extracting, when the broadcast receiver is selected, broadcast information and broadcast video and audio data by protocol-processing broadcast data input from the broadcast receiver;
decoding the broadcast video and audio data;
displaying the broadcast video data on a screen;
converting, when the camera is selected, camera data input from the camera into the broadcast video data representing camera video data;
encoding, if an audiovisual telephony mode is activated, the camera video data together with outgoing voice;
transmit the encoded camera video data and outgoing voice as an outgoing audiovisual telephony signal input through a radio channel;
decoding an incoming audiovisual telephony signal; and
displaying camera video data obtained by decoding the incoming audiovisual telephony signal on the screen.

36. The multimedia processing method of claim 35, wherein the converting camera data comprises:
changing camera pixel clocks into broadcast pixel clocks;
changing horizontal and vertical synchronization signals of the camera data into valid signals of the broadcast data; and
changing camera information of the camera data into broadcast information of the broadcast data.

37. The multimedia processing method of claim 36, wherein the broadcast data is Digital Video Broadcasting-Handheld (DVB-H) data.

38. The multimedia processing method of claim 37, further comprising:
displaying the broadcast video data as a main picture; and
displaying the camera video data as a sub picture at a predetermined position on the main picture.

39. The multimedia processing method of claim 38, wherein displaying the camera video data comprises:
resizing the camera video data to fit for a size of the sub picture; and
overlaying the sub picture on the main picture.

40. The multimedia processing method of claim 39, wherein displaying the camera video data further comprises determining a position at which the sub picture is displayed on the main picture.
